# EUROPÄISCHE PATENTSCHRIFT

(11) **EP 2 887 534 B1**
(45) Veröffentlichungstag und Bekanntmachung des Hinweises auf die Patenterteilung: **13.02.2019**
(21) Anmeldenummer: 14004281.3
(22) Anmeldetag: 18.12.2014
(51) Int. Cl.: H02P 1/44, H02P 6/18

(54) **Elektronische Anlaufschaltung für einen Einphasen-Induktionsmotor**
Electronic starting circuit for a single-phase induction motor
Circuit de démarrage électronique pour un moteur à induction monophasé

(30) Priorität: 20.12.2013 DE 102013021975
(43) Veröffentlichungstag der Anmeldung: 24.06.2015
(73) Patentinhaber: Virant, Robert, 1236 Trzin (SI)
(72) Erfinder: Virant, Robert, 1236 Trzin (SI); Artac, Gorazd, 1210 Ljubljana-Sentvid (SI)
(74) Vertreter: Brehm, Hans-Peter

(56) Entgegenhaltungen:
- DE-A1- 2 508 374
- DE-A1- 10 013 668
- US-A- 3 201 673

## Beschreibung

### TECHNISCHES GEBIET

Die vorliegende Erfindung betrifft eine elektronische Anlaufschaltung zum Starten eines Einphasen-Induktionsmotors, der einen Stator mit wenigstens einer Hauptwicklung und einer Hilfswicklung sowie einen Permanentkondensator und einen nur kurzzeitig während der Startphase zuschaltbaren Startkondensator aufweist. Der Startkondensator ist parallel zum Permanentkondensator angeordnet und ist über einen elektronischen Schalter zuschaltbar, der seinerseits Bestandteil der elektronischen Anlaufschaltung ist. Entsprechende Einphasen-Induktionsmotoren werden typischerweise mit Wechselstrom mit einer Nennspannung von 110 oder 230 Volt und einer Nennfrequenz von 50 oder 60 Hertz betrieben und sind typischerweise für eine Leistung von etwa 100 Watt bis etwa 2 Kilowatt. ausgelegt. Entsprechende Motoren sind weit verbreitet und werden beispielsweise zum Betrieb von Kühlkompressoren, Luftkompressoren, Pumpen, Ventilatoren und anderen, im gewerblichen Bereich benutzten Elektroantrieben eingesetzt.

Ferner betrifft die Erfindung eine elektronische Anlaufschaltungs-Einrichtung zum Starten eines Einphasen-Induktionsmotors, der einen Stator mit wenigstens einer Hauptwicklung und einer Hilfswicklung sowie einen Permanentkondensator und einen dazu parallel geschalteten Startkondensator aufweist, der nur kurzzeitig während der Anlaufphase zuschaltbar ist. Hier bildet die elektronische Anlaufschaltung zusammen mit dem Permanentkondensator und/oder mit dem Startkondensator ein selbständig handhabbares Produkt, das für den Anbau an oder den Einbau in einen derartigen Einphasen-Induktionsmotor bestimmt ist.

Schließlich betrifft die Erfindung einen Einphasen-Induktionsmotor, der einen Stator mit wenigstens einer Hauptwicklung und mit einer Hilfswicklung sowie mit einem Permanentkondensator und mit einem dazu parallel geschalteten Startkondensator aufweist, der mit Hilfe der erfindungsgemäß vorgesehenen elektronischen Anlaufschaltung nur kurzfristig während der Anlaufphase zuschaltbar ist. Die elektronische Anlaufschaltung steuert in Abhängigkeit von Nennspannung und Nennfrequenz der Wechselstromquelle sowie in Abhängigkeit des Betriebszustandes des Motors die Dauer der Zuschaltung des Startkondensators.

### STAND DER TECHNIK

Das Dokument DE 630914 C betrifft eine Anlasseinrichtung für Einphasen-Induktionsmotoren mit selbsttätig abschaltbarem Kondensator im Hilfsphasenkreis. Der aus einem Einphasennetz gespeiste Motor hat eine Hauptphasenwicklung und eine Hilfsphasenwicklung. Im Hilfsphasenkreis liegt ein dauernd eingeschalteter Betriebs- bzw. Permanentkondensator, zu dem ein Anlass- bzw. Startkondensator parallel geschaltet ist, der nach Beendigung der Anlaufphase abgeschaltet werden soll. Zu diesem Zweck ist ein Selbstschalter vorgesehen, der in Form eines Relais ausgebildet ist, dessen Schaltelement magnetisch durch Erregung einer Spannungsspule betätigt wird. Diese Spannungsspule liegt parallel am Startkondensator an, während ihre Kontakte in Reihe mit dem Startkondensator liegen. Während der Anlaufphase steigt die Spannung im Startkondensator dauernd an. Erreicht diese Spannung einen bestimmten Wert, dann spricht das Relais an und schaltet den Startkondensator ab, wobei gleichzeitig die Spannungsspule stromlos wird.

Das Dokument US 7,652,440 B2 betrifft ein Schaltsystem zur Steuerung der Startphase eines Elektromotors, insbesondere eines Einphasen-Induktionsmotors. Nach Beendigung der Start- bzw. Anlaufphase muss ein Hilfsphasenkreis, enthaltend eine Hilfswicklung und einen Startkondensator, stromlos geschaltet werden. Grundsätzlich wird vorgeschlagen, die hierzu bislang verwendeten mechanischen Schalter, insbesondere einen, die Motordrehzahl erfassenden Fliehkraftschalter, durch eine elektronische Anlaufschaltung mit Festkörperschalter zu ersetzen. Diese Anlaufschaltung erfasst die Spannung im Hauptphasenkreis und im Hilfsphasenkreis und bildet ein Steuersignal zum Schalten eines Transistors, insbesondere eines TRIAC. Die Abschaltung des Startkondensators wird bereits vor Ablauf der vorgegebenen maximalen Einschaltdauer in Abhängigkeit von der tatsächlich erreichten Betriebsdrehzahl ausgelöst, wenn die an der Hilfswicklung gemessene drehzahlabhängige Spannung einen entsprechenden Schwellenwert erreicht hat. Die Einschaltbegrenzung besteht dann nur noch zum Schutz, wenn die Betriebsdrehzahl nicht innerhalb dieser vorgegebenen Zeitspanne erreicht wurde, beispielsweise bei blockiertem Motor.

Das Dokument US 3 201 673 A betrifft Anlaufschaltungen für Wechselstrom-Induktionsmotoren, die für Einphasenbetrieb oder für Mehrphasenbetrieb ausgelegt sein können. Ein für Einphasenbetrieb ausgelegter Wechselstrom-Induktionsmotor hat einen gewickelten Stator, in dem sich ein Rotor befindet. Die Statorwicklung besteht aus, in Sehnenwicklung in den Stator geträufelten Gruppen von benachbarten Wicklungen, die in diesem Falle so miteinander verbunden sind, dass eine unterteilte Hauptwicklung geschaffen wird, die etwa mittig zwischen zwei Endanschlüssen einen Mittelpunkt hat. Ein Start- bzw. Anlaufkondensator ist einerseits über einen Umkehrschalter mit der Wechselstromquelle verbunden, und ist andererseits in Reihe mit einem normalerweise geschlossenen, von einer Steuereinrichtung betätigten Schalter auf den Mittelpunkt der Hauptwicklung geschaltet. Diese Steuereinrichtung reagiert in üblicherweise auf die Umdrehungsgeschwindigkeit des Rotors, beispielsweise über einen Fliehkraftschalter oder über die auftretende Gegen-EMK. In den beiden Hälften oder Zweigen der Hauptwicklung fließen phasenverschobene Ströme, die ein Anlaufdrehmoment für den Rotor erzeugen. Nachdem der Rotor um eine vorgegebene Umdrehungsgeschwindigkeit erreicht hat, trennt der Schalter den Anlaufkondensator von der Hauptwicklung. Unter Nutzung der gesamten Hauptwicklung arbeitet der Motor dann als gerader Einphasen-Induktionsmotor. Bei einer Weiterbildung dieses Einphasen-Induktionsmotors kann zusätzlich zum Anlaufkondensator ein parallel geschalteter Lauf- oder Permanentkondensator vorgesehen sein, der wirksam geschaltet bleibt, nachdem der Anlaufkondensator abgeschaltet worden ist.

Das Dokument DE 25 08 374 A1 offenbart einen Einphasen-Induktionsmotor, der aufweist:
- zwei Lauf- bzw. Betriebswicklungen, die bei einer Netzspannung von 110 Volt parallel zum Netzanschluss geschaltet sind, und die bei einer Netzspannung von 220 Volt in Reihe geschaltet sind, so dass auch in diesem Falle an jeder Betriebswicklung eine Spannung von 110 Volt anliegt;
- eine erste und eine zweite Anlass- bzw. Anlaufwicklung, mit je zwei Anschlüssen;
- einen Lauf- bzw. Betriebskondensator, der zwischen einen Netzanschluss und der zweiten Anlaufwicklung geschaltet ist;
- einen Fliehkraftschalter;
- einen Anlass- bzw. Anlaufkondensator, der einerseits über den Fliehkraftschalter mit diesem Netzanschluss verbunden ist, und der andererseits mit der ersten An laufwicklung verbunden ist, die über ihren zweiten Anschluss mit dem anderen Netzanschluss verbunden ist.
Somit wird hier ein Einphasen-Induktionsmotor geschaffen, der bei zwei unterschiedlichen Netzspannungen, nämlich bei 110 Volt oder bei 220 Volt verwendbar ist, wobei zur Anpassung lediglich für den "richtigen" Anschluss der beiden Betriebswicklungen gesorgt werden muss.

Das Dokument JP 07023576 A offenbart eine elektronische Anlaufschaltung zum Starten eines Einphasen-Induktionsmotors, der mit Wechselstrom einer Frequenz von 50 Hertz oder von 60 Hertz betrieben werden kann. Der Motor hat einen Stator mit einer Hauptwicklung und mit einer Hilfswicklung sowie einen auswählbaren und zuschaltbaren Permanentkondensator, der aus einer Gruppe von wenigstens zwei unterschiedlichen Kondensatoren auswählbar ist. Der eine, für eine Frequenz von 50 Hertz ausgelegte Kondensator wird ausgewählt, wenn der Motor mit Wechselstrom einer Frequenz von 50 Hertz betrieben werden soll, und der andere, für eine Frequenz von 60 Hertz ausgelegte Kondensator wird ausgewählt, wenn der Motor mit Wechselstrom einer Frequenz von 60 Hertz betrieben werden soll. Die Anlaufschaltung erfasst mit Hilfe einer Abtasteinrichtung, welche Frequenz die Wechselstromversorgungsquelle liefert, und erzeugt mit Hilfe einer Steuerungseinrichtung ein Kondensatorauswahlsignal, das einer Kondensatorauswahl- und Kondensatoranschließ-Einrichtung zugeführt wird. Diese letztere Einrichtung schließt den ausgewählten, "richtigen", der gelieferten Frequenz entsprechenden Permanentkondensator an den Einphasen-Induktionsmotor an. Das Auswählen und Anschließen des "richtigen" Permanentkondensators erfolgt automatisch; eine von Hand erfolgende Auswahl in Abhängigkeit von der 50 oder 60 Hertz liefernden Wechselstromversorgungsquelle ist nicht erforderlich; so kann ein auf fehlerhafter Auswahl beruhender Fehler vermieden werden. Somit ist die hier beschriebene elektronische Anlaufschaltung zwar bei unterschiedlichen Frequenzen aber nicht bei unterschiedlichen Nennspannungen der Wechselstromversorgungsquelle einsetzbar.

Das Dokument DE 100 13 668 A1 betrifft eine Ansteuervorrichtung für einen Wechselstromkreis, insbesondere eine Anlaufsteuerschaltung für einen Einphasen-Induktionsmotor. Ein Einphasen-Induktionsmotor kann mit lediglich einer Phase gegen ein festes Bezugspotential, beispielsweise einen Nullleiter betrieben werden. Der Stator enthält wenigstens zwei Wicklungen, und die zur Erzeugung eines Drehfeldes notwendige phasenverschobene Ansteuerung der beiden Wicklungen erfolgt durch einen in Reihe mit der zweiten Wicklung geschalteten Betriebs- oder Permanentkondensator. Weil dieser Permanentkondensator üblicherweise für einen hohen Wirkungsgrad bei der beabsichtigten Nenndrehzahl des Motors ausgelegt ist, wird bei niedriger Motordrehzahl nur ein sehr niedriges Drehmoment erhalten.

Um dennoch auch bereits bei niedrigen Drehzahlen ein relativ hohes Drehmoment zu erhalten, kann die Kennlinie des Motors durch Zuschalten eines Anlauf- oder Startkondensators parallel zum Permanentkondensator so verändert werden, das bereits bei niedrigen Drehzahlen ein höheres Drehmoment zur Verfügung steht. Allerdings muss der Startkondensator nach Erreichen der Solldrehzahl abgeschaltet werden, da er ansonsten die Verluste im Motor unnötigerweise erhöhen und zu einem unruhigen Lauf führen würde. Beim stromlos Schalten des Startkondensators kann an diesem die maximale Spannung anliegen und als Ladung erhalten bleiben. Da eine Halbwelle später am Permanentkondensator die umgepolte maximale Spannung anliegt, kann so im schlimmsten Falle an dem dazwischen liegenden Schaltelement die Summe beider Spannungen anliegen. Dieses Schaltelement muss daher die doppelte Spannungsfestigkeit gegenüber der an beiden Kondensatoren auftretenden Spannung aufweisen. Als preisgünstiges Schaltelement, das derartig hohe Spannungen präzise und sicher schalten kann, wird hier beispielsweise ein IGBT-Transistor vorgeschlagen. IGBT steht für insulated-gate bipolar transistor und bezeichnet einen Bipolartransistor mit isolierter Gate-Elektrode. Derartige IGBT-Transistoren sind in der Fachwelt bekannt und im Fachhandel handelsüblich zugänglich.

Mehr im Einzelnen offenbart das Dokument DE 100 13 668 A1 eine elektronische Anlaufschaltung zum Starten eines Einphasen-Induktionsmotors,
der einen Stator mit wenigstens einer Hauptwicklung und einer Hilfswicklung sowie einen Permanentkondensator und einen nur kurzzeitig während der Anlaufphase zuschaltbaren Startkondensator aufweist,
wobei:
- dieser Motor einen ersten Motoranschluss, einen zweiten Motoranschluss und einen dritten Motoranschluss hat;
- die Hauptwicklung über den dritten Motoranschluss direkt an einen Außenleiter der Wechselstromquelle anschließbar ist sowie über den zweiten Motoranschluss direkt an den Nullleiter der Wechselstromquelle anschließbar ist;
- die Hilfswicklung über den ersten Motoranschluss und den in Serie dazu geschalteten Permanentkondensator direkt an den Außenleiter der Wechselstromquelle anschließbar ist sowie über den zweiten Motoranschluss direkt an den Nullleiter der Wechselstromquelle anschließbar ist; und
- die elektronische Anlaufschaltung einen elektronischen Schalter hat, welcher den parallel zum Permanentkondensator angeordneten Startkondensator zuschaltet oder trennt;
wobei:
- dieser elektronische Schalter einen IGBT-Transistor und einen ersten Brückengleichrichter aufweist, dessen Plus-Anschluss mit dem IGBT-Kollektor, dessen Minus-Anschluss mit dem IGBT-Emitter und dessen erster Wechselstrom-Anschluss über einen vierten Anlaufschaltungsanschluss mit dem Außenleiter der Wechselstromquelle und dessen zweiter Wechselstromanschluss über einen dritten Anlaufschaltungsanschluss mit dem Startkondensator verbunden ist;
- ferner eine Steuereinrichtung vorhanden ist, welche ein Erreichen der Betriebsdrehzahl durch Spannungsmessung erfasst und dementsprechend das Gate des IGBT-Transistors mit einem Steuersignal zum Ein- und Ausschalten des IGBT-Transistors versorgt, wobei durch Vornahme des Schaltvorganges in definiertem Zeitabstand zum Spannungsnulldurchgang am Permanentkondensator eine optimierte Schalter belastung erreicht wird; und
- eine an die Wechselstromquelle angeschlossene Kleinspannungsversorgung für die Komponenten der elektronischen Anlaufschaltung vorhanden ist.

Mit der vorliegenden Erfindung soll eine elektronische Anlaufschaltung dieser gattungsgemäßen Art bereitgestellt werden.

### AUFGABE DER VORLIEGENDEN ERFINDUNG

Aus Kostengründen werden in derartigen Einphasen-Induktionsmotoren als Startkondensator häufig bipolare Elektrolytkondensatoren eingesetzt. Elektrolytkondensatoren sind für die hier auftretenden Wechselströme nicht dauerbelastbar. Im Hinblick auf die am Startkondensator auftretende hohe Strombelastung muss die Anlaufschaltung eine sichere Abschaltung des Startkondensators gewährleisten, nachdem der Motor seine Nenndrehzahl erreicht hat. Solange der Startkondensator eingeschaltet ist, zieht der Motor wesentlich mehr Strom als unter Normalbedingungen; der Motor würde daher überhitzen, wenn der Startkondensator nicht rechtzeitig abgeschaltet wird. Je nach Art, Bauweise und Kapazität darf der Startkondensator nur für eine maximale Dauer von etwa 0,2 bis 10 Sekunden in Betrieb gehalten werden. Im Rahmen der vorliegenden Erfindung wird eine maximale Einschaltdauer von etwa 0,2 bis 10 Sekunden angestrebt. Pro 0,1 Sekunde Einschaltdauer muss zur Abkühlung eine etwa 20 mal längere Ausschaltdauer vor erneutem Wiedereinschalten eingehalten werden. Würden diese Bedingungen nicht eingehalten werden, dann würde der Elektrolyt im Startkondensator zu kochen anfangen; der entstehende Druck würde über ein Sicherheitsventil abgelassen werden; und der Kondensator wäre nicht länger brauchbar. Im konkreten Einzelfall ist die Erkennung der Anlaufphase von verschiedenen Faktoren abhängig; insbesondere der Nennspannung und der Nennfrequenz der Wechselstromquelle. Alle diese Faktoren beeinflussen die Ausgestaltung und den Aufbau der elektronischen Anlaufschaltung sowie die Wahl von Einstellungswerten. Beispielsweise müssen die, der Betriebsdrehzahl entsprechenden Spannungsschwellenwerte an die jeweils anliegende Nennspannung und Nennfrequenz angepasst werden.
Nach dem Stand der Technik war es nicht möglich, elektronische Anlaufschaltungen der gattungsgemäßen Art bereitzustellen, die bei unterschiedlichen Einphasen-Induktionsmotoren einsetzbar waren, die entweder mit 110 Volt oder mit 230 Volt betrieben und/oder die mit Wechselstrom von 50 oder 60 Hertz betrieben wurden. Für alle diese unterschiedlichen Anwendungsfälle mussten unterschiedliche und jeweils bestimmt angepasste elektronische Anlaufschaltungen bereitgehalten werden oder wenigstens eine Anpaß-Einstellung an den Anlaufschaltungen vor Einbau vorgenommen werden. Dies verursachte bei den Motorenherstellern einen entsprechend hohen Aufwand zur Beschaffung und Lagerung verschiedener Anlaufschaltungen oder zur Vornahme von deren einsatzbezogenen Voreinstellungen.

Ferner kann es vorkommen, dass die von der Wechselstromquelle bereitgestellte Nennspannung nicht in dieser Größe beim Motor ankommt, weil in der Verbindungsleitung zwischen Wechselstromquelle und Motor nicht unerhebliche Spannungsabfälle an der Leitungsimpedanz auftreten. Beispielsweise kann ein solcher Einphasen-Induktionsmotor zum Antrieb von Sauggebläse und Walze einer Kehrmaschine dienen. Die Verbindungsleitung zum Anschluss der Kehrmaschine an eine Stromquelle kann häufig eine Länge von 50 m und mehr haben. Gleiches kann für Bohrmaschinen und Bohrhämmer gelten, die am Bau eingesetzt werden. In einem solchen Falle kann die an der Anlaufschaltung, am Startkondensator und am gesamten Motor anliegende Spannung deutlich kleiner sein, als die nominelle Nennspannung der Wechselstromquelle, vorüber gehend beispielsweise um bis zu 50 % kleiner. Die Anlaufschaltung muss auch solche Situationen meistern, ohne dass an der Anlaufschaltung irgendwelche Manipulationen zur Anpassung vorgenommen werden müssten.

Davon ausgehend, besteht die, der vorliegenden Erfindung zugrunde liegende Aufgabe darin, eine Anlaufschaltung der gattungsgemäßen Art bereitzustellen, die in einer einzigen Ausführungsform und ohne die Notwendigkeit zur Vornahme von Manipulationen an dieser Ausführungsform, bei Wechselstrom-Nennfrequenzen von 50 oder 60 Hertz, bei Wechselstrom-Nennspannungen von 110 oder 230 Volt, sowie bei, gegenüber diesen nominellen Wechselstrom-Nennspannungen um bis zu 50 % kleineren, am Motor tatsächlich anliegenden Spannungen einsetzbar sind.
Die Anlaufschaltung soll eine Einschaltdauer des Startkondensators in der Größenordnung von 0,2 bis 10 Sekunden sicher und präzise schalten können.

### ERFINDUNGSGEMÄSSE LÖSUNG DIESER AUFGABE

Ausgehend von der oben genannten gattungsgemäßen elektronischen Anlaufschaltung ist die erfindungsgemäße Lösung in Anspruch 1 definiert.

Es ist typischerweise vorgesehen, dass der Einphasen-Induktionsmotor mit Wechselstrom einer Nennspannung von 110 Volt oder 230 Volt sowie mit einer Nennfrequenz von 50 Hertz oder 60 Hertz betreibbar ist, und die Wechselstromquelle entsprechenden Wechselstrom bereitstellt.
Die elektronische Anlaufschaltung weist fünf Anlaufschaltungsanschlüsse auf, nämlich:
- einen ersten Anlaufschaltungsanschluss, über welchen ein erster Pol einer Spannungsmesseinrichtung der Anlaufschaltung mit dem Außenleiter der Wechselstromquelle am ersten Motoranschluss verbunden ist;
- einen zweiten Anlaufschaltungsanschluss, über welchen die Spannungsmesseinrichtung der Anlaufschaltung mit dem Nullleiter der Wechselstromquelle verbunden ist;
- einen dritten Anlaufschaltungsanschluss, über den der Schalter mit dem Anlaufkondensator verbunden ist, wobei der IGBT-Transistor diesen dritten Anlaufschaltungsanschluss stromführend oder stromlos schaltet;
- einen vierten Anlaufschaltungsanschluss, der mit dem L-Leiter oder Außenleiter der Wechselstromquelle verbunden ist, sofern diese Wechselstromquelle eine Nennspannung von 110 Volt liefert; und
- einen fünften Anlaufschaltungsanschluss, der an Stelle des und alternativ zum vierten Anlaufschaltungsanschluss mit dem L-Leiter oder Außenleiter der Wechselstromquelle verbunden ist, sofern diese Wechselstromquelle eine Nennspannung von 230 Volt liefert.

Zur Anpassung der Anlaufschaltung an einen Einphasen-Induktionsmotor der angegebenen Art, der mit Wechselstrom von 110 Volt betrieben wird, oder an einen Einphasen-Induktionsmotor, der mit Wechselstrom von 230 Volt betrieben wird, ist es daher lediglich erforderlich, den richtigen Anlaufschaltungsanschluss mit dem L-Leiter oder Außenleiter der Wechselstromquelle zu verbinden, nämlich im Falle einer 110 Volt liefernden Wechselstromquelle mit dem vierten Anlaufschaltungsanschluss, und im Falle einer 230 Volt liefernden Wechselstromquelle mit dem fünften Anlaufschaltungsanschluss. Irgendwelche Manipulationen und/oder Anpassungen unmittelbar und direkt an der Anlaufschaltung und/oder die Auswahl und Anwendung unterschiedlicher, je angepasster Anlaufschaltungen ist nicht erforderlich.

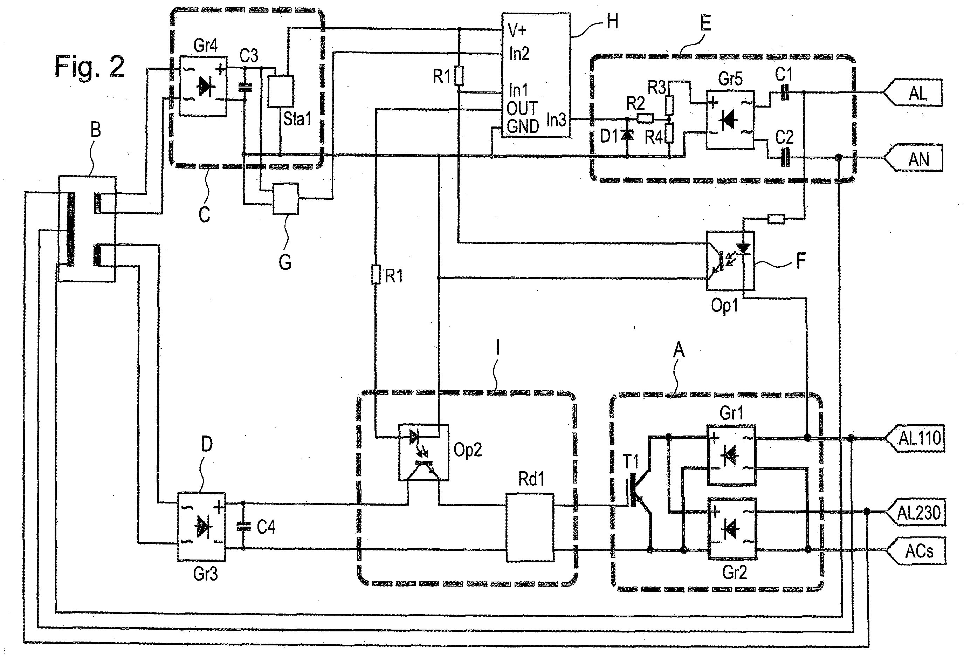

Typischerweise umfasst die Anlaufschaltung eine Platine, auf der die Bauteile und Schaltungskomponenten aufgebracht und gemäß Schaltplan (vgl. auch Fig. 2 und nachfolgende Ausführungen zu "beispielhafte Ausführungsform") miteinander verknüpft sind. Die gesamte Einheit kann in Kunstharz eingebettet und in einem Gehäuse eingehaust sein. Die fünf Anlaufschaltungsanschlüsse sind als, aus diesem Gehäuse herausführende Kabelschwänze ausgebildet, an deren Ende je ein Steckverbinderteil angebracht ist. Typischerweise ist der Anwender bzw. Motorhersteller nicht in der Lage, den Schaltungsaufbau und/oder im Mikrokontroller abgespeicherte Werte und Parameter zu verändern.

Die elektronische Anlaufschaltung weist eine erhebliche Toleranz bei tatsächlich auftretenden Spannungsabweichungen bzw. -Einbrüchen gegenüber den vorgegebenen Nennspannungen auf. Die Funktion der Steuerung ist durch eine entsprechende Stabilisierung der Versorgungsspannung über einen breiten Spannungsbereich gesichert, der wenigstens eine bis zu 50 %-ige Abweichung von der Nennspannung umfasst. Auch wird die Spannungsmessgröße zur Ermittlung des Abschaltsignals für den IGBT-Transistor durch solche Spannungsschwankungen nur unwesentlich beeinträchtigt, denn bei dieser ermittelten Spannungsmessgröße handelt es sich nicht um die Netz- bzw. Wechselstromquellen-Spannung, sondern um die vom drehenden Motor induzierte, drehzahlabhängige Spannung. Diese wird nicht so wesentlich von der aktuellen, tatsächlich auftretenden Netzspannung beeinflusst. Vielmehr wird das tatsächlich auftretende "Spannungs/Drehzahl"-Verhältnis als Maschinenkonstante passend zur projektierten Nennspannung in der Regel durch entsprechende Wahl der Windungszahlen der Motorwicklung bestimmt.

Die elektronische Anlaufschaltung führt darüber hinaus eine Anpassung an die Nennspannung, für welche der Motor vorgesehen ist, und eine Anpassung an die Nennfrequenz durch. Für den Betrieb bei unterschiedlichen Nennspannungen und Nennfrequenzen kommen einerseits unterschiedliche Spannungsschwellenwerte zur Anwendung, die der Drehzahl entsprechen, bei deren Überschreitung die Abschaltung des elektronischen Schalters veranlasst werden muss; andererseits sind - Nennspannungs-abhängig und Nennfrequenz-abhängig - auch unterschiedliche Verzögerungszeiten nach den Spannungsnulldurchgängen einzuhalten, nach denen der Schaltvorgang mit optimaler Belastung des IGBT-Transistors erfolgt. Diese als Steuerparameter vorher ermittelten Werte sind als Nennspannungs-abhängige und Nennfrequenz-abhängige Datensätze fest im Mikrokontroller abgespeichert.

Die Anlaufschaltung führt eine Anpassung an Nennspannung und Nennfrequenz automatisch entsprechend eines Erkennungsvorganges ("Lernvorgang") durch, welche für diese verschiedenen Umgebungsbedingungen seitens Wechselstromquelle und Motor besteht, um danach den dazu passenden Datensatz auszuwählen: Auf die Nennspannung des Motors, beispielsweise 110 Volt oder 230 Volt, wird durch die an der Hilfswicklung tatsächlich auftretende und gemessene Wechselspannungsamplitude geschlossen; die tatsächlich anliegende Nennfrequenz, beispielsweise 50 Hertz oder 60 Hertz, wird aus der Messung der Zeitabstände zwischen zwei Spannungsnulldurchgängen, insbesondere zwischen zwei aufeinanderfolgenden Spannungsnulldurchgängen ermittelt.

Folglich ist die erfindungsgemäße Anlaufschaltung kompatibel bezüglich der weltweit üblichen Wechselstromnetz-Frequenzen.

Der Einphasen-Induktionsmotor und der passende Satz von Permanentkondensator und Startkondensator werden nach Maßgabe der geforderten Leistungen und anfallenden Lastfällen berechnet, ausgewählt und zusammengebaut. Der resultierende Bausatz wird dann mit der immer gleichen, universell einsetzbaren, erfindungsgemäßen Anlaufschaltung zu einem selbsttätig funktionierenden Antriebssatz komplementiert. An der Anlaufschaltung müssen weder Software- noch Hardwareanpassungen vorgenommen werden. Es muss lediglich der richtige Anlaufschaltungsanschluss (vierter oder fünfter Anlaufschaltungsanschluss) ausgewählt und an die L-Leiterklemme der Wechselstromversorgung angeschlossen werden, um die Anpassung an die anliegende Nennspannung vorzunehmen. Eine einzige Ausführungsform der Anlaufschaltung ist für all die verschiedenen elektrischen Maschinen auf der Basis von Einphasen-Induktionsmotor mit Haupt- und Hilfswicklung sowie mit Permanent- und Startkondensator geeignet, die in den verschiedenen Regionen der Erde eingesetzt werden. Dies ermöglicht erhebliche Einsparungen der Motorhersteller bei Auswahl, Anschaffung und Lagerhaltung der benötigten Anlaufschaltungen.

Ein weiterer Gesichtspunkt betrifft eine elektronische Anlaufschaltungs-Einrichtung zum Starten eines Einphasen-Induktionsmotors der oben angegebenen Art. Die erfindungsgemäße Besonderheit besteht darin, dass die vorstehend beschriebene erfindungsgemäße elektronische Anlaufschaltung bereits herstellerseitig mit dem für den Einphasen-Induktionsmotor vorgesehenen Permanentkondensator und/oder Startkondensator verbunden wird, um so ein selbständig handhabbares Produkt bereitzustellen, das für den Anbau an oder den Einbau in einen derartigen Einphasen-Induktionsmotor bestimmt ist.

Eine derartige Anlaufschaltungs-Einrichtung ist vorteilhaft für die Fertigungsorganisation beim Motorhersteller, weil die für die Fertigung bestimmter, vorgegebener Motoren vorgesehene Steuerungseinheit komplett bereitgestellt wird, so dass beim Motorhersteller auf die Auswahl und Handhabung von Elektronik und passenden Kondensatoren verzichtet werden kann.

Vorzugweise wird hier ein Permanentkondensator verwendet, der als Folienkondensator oder als Metallpapierkondensator ausgebildet ist. Derartige Kondensatoren zeichnen sich durch geringe Verluste und hohe Lebensdauer aus, wodurch eine Dauerbelastbarkeit gewährleistet ist. Es stehen auch Folienkondensatoren und Metallpapierkondensatoren mit je selbstheilenden Eigenschaften zur Verfügung, wodurch die Zuverlässigkeit des gesamten Antriebssytems erheblich verbessert wird. Besonders bevorzugt werden daher als Permanentkondensator derartige Folien- und Metallpapier-Kondensatoren eingesetzt, die geringe Verluste, hohe Lebensdauer und selbstheilende Eigenschaften aufweisen. Für den Einsatz in Einphasen-Induktionsmotoren der hier betrachteten Art vorgesehene Permanentkondensatoren haben typischerweise eine Kapazität von 1 bis 50 Mikrofarad (µF). Derartige, als Folien- oder Metallpapier-Kondensatoren ausgebildete Permanentkondensatoren werden beispielsweise von EPCOS AG, 81677 München, DE unter der Handelsbezeichnung "Super MotorCap B32333 (250 Volt)" vertrieben.

Weiterhin kann hier als Startkondensator vorzugsweise ein nicht polarisierter bzw. bipolarer Elektrolytkondensator ausgewählt werden, der - bei vergleichsweise geringen Kosten - im Vergleich zu Kondensatoren mit festem Dielektrikum eine wesentlich höhere Kapazität pro Volumen bereitstellt. Die Bipolarität, also die Möglichkeit, die eigentlich nur Gleichspannungs-tauglichen Elektrolytkondensatoren mit Wechselspannung beaufschlagen zu können, wird üblicherweise durch die entgegengesetzte Serienschaltung von zwei Elektrolytkondensatoren mit gleicher Kapazität erreicht. Da die Startkondensatoren nur kurzzeitig eingeschaltet und in Betrieb gehalten werden müssen, führt die vergleichsweise geringe Dauerstrombelastbarkeit zu keinen Nachteilen.

Für den Einsatz als Startkondensator in Einphasen-Induktionsmotoren der hier betrachteten Art geeignete bipolare bzw. nicht polarisierte Elektrolytkondensatoren werden beispielsweise von CDE CORNELL DUBILIER, New Bedford, Massachusetts, USA unter der Handelsbezeichnung "PSU AC Motor Start Capacitors" mit Kapazitäten von 21 µF bis 1280 µF und für Wechselstrom-Nennspannungen von 110 Volt bis 330 Volt angeboten. In der erfindungsgemäßen Anlaufschaltungs-Einrichtung werden vorzugsweise derartige bipolare bzw. nicht polarisierte Elektrolytkondensatoren eingesetzt, die eine Kapazität von 20 µF bis 500 µF haben. Vorzugsweise soll der Startkondensator etwa die 10-fache bis etwa 50-fache Kapazität des Permanentkondensators aufweisen.

Noch ein weiterer Gesichtspunkt betrifft einen Einphasen-Induktionsmotor der vorstehend angegebenen Art, der mit einer erfindungsgemäßen Anlaufschaltung ausgerüstet ist. Mit der Erfindung wird eine neue, vorteilhafte Anlaufschaltung bereitgestellt. Es soll auch die wesentliche und vorteilhafte Anwendung einer solchen Anlaufschaltung unter Schutz gestellt und beansprucht werden, nämlich die Komplementierung eines Einphasen-Induktionsmotor der angegebenen Art mit einer erfindungsgemäßen Anlaufschaltung. Insgesamt wird mit diesem Aspekt der Erfindung eine vorteilhafte, vielseitig einsetzbare elektrische Maschine bereitgestellt.

Die Anwendung der Anlaufschaltung ist nicht besonders begrenzt. Der verwendete IGBT-Transistor kann Ströme bis zu etwa 40 Ampere schnell, sicher und präzise schalten. Damit können unter den gegebenen Bedingungen Startkondensatoren sicher betrieben werden, die in Form von bipolaren bzw. nicht polarisierten Elektrolytkondensatoren ausgebildet und zusammengeschaltet sind und zusammen eine Kapazität von etwa 20 µF bis etwa 1000 µF (Mikrofarad) bereitstellen.

Besonders vorteilhaft ist die Anwendung der elektronischen Anlaufschaltung bei Einphasen-Induktionsmotoren der hier betrachteten Art, die für eine Leistung von etwa 100 bis 2000 Watt ausgelegt sind. Derartige Motoren können beispielsweise in Kühl-Kompressoren, Luftkompressoren, Pumpen, Ventilatoren und anderen, im gewerblichen Bereich benutzten Elektroantrieben eingesetzt werden.

### VORTEILHAFTE AUSGESTALTUNGEN DER ERFINDUNG

Vorteilhafte Ausgestaltungen und Weiterbildungen der Erfindung sind Gegenstand der Unteransprüche.

So kann vorzugsweise vorgesehen werden, dass eine vorteilhafte Ausgestaltung der erfindungsgemäßen Anlaufschaltung in Form eines eigenständigen, abgegrenzten Moduls eine Spannungsmesseinrichtung aufweist, in/mit der die Amplitude der Spannung an der Hilfswicklung bestimmt wird. Hierzu ist vorgesehen, dass:
- das am ersten Anlaufschaltungsanschluss anliegende Potential einem ersten Kondensator zugeführt wird;
- das am zweiten Anlaufschaltungsanschluss anliegende Potential einem zweiten Kondensator zugeführt;
- die an den Ausgängen dieser beiden Kondensatoren anfallenden Spannungen den Wechselstromeingängen eines fünften Brückengleichrichters zugeführt werden; und
- dessen Gleichspannung-Ausgangssignale über einen Spannungsteiler und Spannungsbegrenzer einem Analog-nach-Digital-Wandler-Eingang des Mikrokontrollers zugeführt werden.

Es werden hier Bauteile und Komponenten ausgewählt, die für eine Auswertung von Spannungen zwischen 50 Volt bis 300 Volt geeignet sind.

Damit können die an der Motorwicklung bei unterschiedlichen Nennspannungen und unterschiedlichen Nennfrequenzen auftretenden Spannungen sicher und zuverlässig erfasst und an den steuernden Mikrokontroller weitergeleitet werden.

Besonders vorteilhaft ist, wenn bei dieser Ausgestaltung
die zwischen dem ersten Anlaufschaltungsanschluss und dem vierten Anlaufschaltungsanschluss oder fünften Anlaufschaltungsanschluss anliegende Spannung über Vorwiderstände der Leuchtdiode eines ersten Optokopplers zugeführt wird, der ein rechteckiges Ausgangssignal liefert, dessen Vorzeichen dem Vorzeichen des Verlaufes der Spannung am Permanentkondensator entspricht, und dessen Flanken etwa zeitgleich zu den Nulldurchgängen dieses Wechselspannungsverlaufs am Permanentkondensator sind; und
dieses Rechtecksignal einem Digitaleingang des Mikrokontrollers zugeführt wird. Damit kann eine galvanisch getrennte Messung der Nulldurchgänge an einer zweiten Spannung unabhängig von deren Bezugspotential zur ersten gemessenen Spannung bereitgestellt werden. Der Optokoppler dient als Nullspannungsschalter und bewirkt gleichzeitig die galvanische Trennung. Diese Nulldurchgangsmessung ist die Voraussetzung für eine Platzierung des Schaltzeitpunktes relativ zu den Nulldurchgängen derartig, dass einerseits ein Optimum hinsichtlich der am Startkondensator verbleibenden Ladespannung nach Abschalten des Startkondensators erzielt wird, und andererseits ein optimaler Ausgleichsstrom zwischen Startkondensator und Permanentkondensator entstehen kann. Statt der Wechselstromperioden-bezogenen zufälligen zeitlichen Lage der Schaltungsereignisse wird ein konstantes, dauerhaft reproduzierbares Schalten bewirkt.

Bei einer weiteren vorteilhaften Ausgestaltung der elektronischen Anlaufschaltung kann die Kleinspannungsversorgung für die Komponenten der elektronischen Anlaufschaltung in Form eines weiteren abgegrenzten eigenständigen Moduls ausgebildet sein. Hier ist vorgesehen, dass
- die transformatorisch angeschlossene Kleinspannungsversorgung eine Zwei-Spannungs-Primärwicklung aufweist, die wahlweise an denjenigen Anlaufschaltungsanschluss anschließbar ist, welcher der von der Wechselstromquelle bereitgestellten Nennspannung entspricht;
- diese Zwei-Spannungs-Primärwicklung mit einer ersten Sekundärwicklung gekoppelt ist, die Wechselkleinspannung für die Versorgung des Mikrokontrollers bereitstellt;
- diese Wechselkleinspannung in einem vierten Brückengleichrichter zu einem Gleichspannungssignal von etwa 20 Volt gleichgerichtet wird, das über ein Stabilisatorelement auf 5 Volt stabilisiert dem Mikrokontroller zugeführt wird; und
- dieses Gleichspannungssignal noch vor dem Stabilisatorelement angezapft und einer Spannungsmesseinrichtung zugeführt wird, die das resultierende Messsignal einem Eingang des Mikrokontrollers zuführt, damit dieser bei einem allfälligen Zusammenbruch der Spannungsversorgung den IGBT-Transistor sicher in den Sperrzustand schaltet.

Damit wird erreicht, dass über einen sehr großen möglichen Schwankungsbereich der Eingangsspannung aus der Wechselstromquelle stets eine stabile Versorgungsspannung für den ungestörten Betrieb des Mikrokontrollers sichergestellt ist, und bei Versorgungsverlust rechtzeitig in den sicheren Zustand abgeschaltet werden kann. Dies ist von besonderer Bedeutung für den sicheren Betrieb des Motors auch an recht schwachen Netzen mit schwankender Spannung und/oder bei langen Zuleitungen mit hoher Impedanz, wobei insbesondere wegen der erhöhten Stromaufnahme während der Hochlaufphase ein größerer Spannungsabfall auftreten kann.

Weiterhin kann bei dieser Ausgestaltung vorzugsweise vorgesehen werden, dass diese Zwei-Spannungs-Primärwicklung der Kleinspannungsversorgung mit einer zweiten Sekundärwicklung gekoppelt ist, die Wechselkleinspannung für die Versorgung des IGBT-Transistors bereitstellt; und
diese Wechselkleinspannung in einem dritten Brückengleichrichter zu einem Gleichstromsignal von etwa 20 Volt gleichgerichtet wird, das einem zweiten Optokoppler zugeführt wird, dessen Leuchtdiode ein vom Mikrokontroller ausgegebenes Schaltsignal zugeführt wird, das schließlich galvanisch getrennt dem Gate des IGBT-Transistors zugeführt wird.

Damit wird erreicht, dass die Mikrokontroller-Steuerung galvanisch getrennt zur Leistungskreisansteuerung betrieben werden kann, wodurch eine sehr einfache, auf das Steuerungspotential bezogene Messung der Spannung ermöglicht wird.

Zur elektronischen Anlaufschaltung gehört ein Mikrokontroller,
- der die Motordrehzahl-abhängige Spannung an einer der Motorwicklungen erfasst und bei Erreichen eines vorgegebenen Schwellenwertes den IGBT-Transistor ausschaltet; und
- der lernt, mit welcher der beiden alternativen Nennspannungen die Wechselstromquelle betrieben wird, und der danach die dazu passenden vorgegebenen und abgespeicherten Spannungsamplituden, bei denen der elektronische Schalter in den Durchlasszustand oder in den Sperrzustand geschaltet werden soll, zum Schalten des IGBT-Transistors auswählt; und
- der, basierend auf den erfassten Spannungs-Nulldurchgängen die Umschaltungen des IGBT-Transistors zu einem vorgegebenen nulldurchgangsbezogenen Zeitpunkt ausgibt; und
- der die unterschiedlichen Nennfrequenzen (beispielsweise 50 oder 60 Hertz) der Wechselstromquelle durch Messung der Zeit zwischen zwei aufeinanderfolgenden Nulldurchgängen ermittelt und danach die dazu passenden vorgegebenen und abgespeicherten frequenzabhängigen Wartezeiten, die zwischen den gemessenen Spannungsdurchgängen und der Ausführung des Schaltvorganges vorgesehen sind, zum Schalten des IGBT-Transistors auswählt.

Bei diesem Mikrokontroller handelt es sich um einen programmierbaren Mikroprozessor. Programmierbare Mikroprozessoren dieser Art sind im Fachhandel erhältlich. Für die Anwendung bei der erfindungsgemäßen Anlaufschaltung gut geeignet, ist beispielsweise der von MICROCHIP TECHNOLOGY INC., Chandler, Arizona, USA unter der Handelsbezeichnung PIC 12F675 vertriebene Mikroprozessor oder entsprechende Derivate, sowie der von INTEL CORPORATION, Santa Clara, Kalifornien, USA unter der Handelsbezeichnung Intel8051vertriebene Mikroprozessor. Für die Anwendung in der erfindungsgemäßen Anlaufschaltung brauchbare, programmierbare Mikroprozessoren sollen typischerweise als sogenannte Ein-Chip-Prozessoren alle erforderlichen Peripheriekomponenten, Analog-Nach-Digital-Wandler, Zeittaktgeber, RAM (Arbeitsspeicher) und nicht-flüchtige Speicher bereits integriert enthalten. Die Programmierung erfolgt nach Maßgabe der vorliegenden Erfindung.

Die typischerweise eingesetzten Startkondensatoren sind für eine Einschaltdauer von etwa 0,2 bis 10 Sekunden ausgelegt. Der Mikroprozessor wird entsprechend programmiert, um innerhalb dieser Zeitspanne die erforderlichen Messwerte zu verarbeiten und den IGBT-Transistor entsprechend zu schalten.

Vorzugsweise ist vorgesehen, dass
im Mikrokontroller mehrere Datensätze abgespeichert sind, welche vorher ermittelte, vorgegebene und fest eingespeicherte Werte enthalten,
a) für diejenigen Spannungsamplituden, bei denen der elektronische Schalter in den Durchlasszustand oder in den Sperrzustand geschaltet werden soll; und
b) für die Wartezeiten, die zwischen den gemessenen Spannungs-Nulldurchgängen und der Ausführung des Schaltvorgangs vorgesehen sind; und
für die unterschiedlichen Nennspannungen und unterschiedlichen Frequenzen der Wechselstromquelle entsprechende Datensätze gebildet und im Mikrokontroller abgespeichert sind, und zwischen diesen Datensätzen nach Maßgabe der in der Spannungsmessstation erhaltenen Messwerte umgeschaltet wird.

Besonders vorteilhaft ist hier, wenn die Umschaltung zwischen den Datensätzen für unterschiedliche Nennspannungen automatisch erfolgt in Abhängigkeit vom gemessenen Spannungsverlauf beim Hochlaufen der Motordrehzahl; und
die Umschaltung zwischen den Datensätzen für unterschiedliche Nennfrequenzen automatisch erfolgt nach Messung der Zeitabstände zwischen zwei Nulldurchgängen des Spannungsverlaufs, insbesondere zwischen zwei aufeinanderfolgenden Nulldurchgängen des Spannungsverlaufs.

Damit wird erreicht, dass die auf der Basis von umfangreicheren Analysen und mit Hilfe von entsprechenden Messmitteln im Prüffeld ermittelten Daten für den optimalen Schaltungsablauf für die unterschiedlichen Nennspannungen und Nennfrequenzen einen optimalen Betrieb der erfindungsgemäß ausgerüsteten Motoren gewährleisten.

Weiterhin ist hier vorzugsweise vorgesehen, dass
der Mikrokontroller zur Erfassung des Hochlaufzustandes der Motordrehzahl die zwischen dem ersten Anlaufschaltungsanschluss und dem zweiten Anlaufschaltungsanschluss anliegende Wechselspannungsamplitude überwacht, und den elektronischen Schalter solange in einen Durchlasszustand schaltet, solange ein vorher festgelegter, vorgegebener und abgespeicherter Schwellenwert für diese Spannungsamplitude nicht überschritten wird, und
den elektronischen Schalter in den Sperrzustand schaltet, nachdem dieser Schwellenwert überschritten ist.

Hierdurch bleibt der Startkondensator exakt immer nur so lange eingeschaltet, wie es für den sicheren und schnellen Hochlauf erforderlich ist. Gegenüber einem, durch fest vorprogrammierte Einschaltdauer bestimmten Ablauf, wird der zusätzliche Vorteil erzielt, dass flexibel auf irgendwelche Rückwirkungen reagiert wird, die während der Hochlaufphase durch ungleichmäßige oder unstetige Belastung des Motors auftreten können.

### BEISPIELHAFTE AUSFÜHRUNGSFORM

Nachstehend wird die erfindungsgemäße elektronische Anlaufschaltung mehr im einzelnen anhand einer beispielhaften Ausführungsform mit Bezugnahme auf Zeichnungen erläutert; die letzteren zeigen, mit:
- Fig.1: in schematischer Darstellung den Anschluss einer erfindungsgemäßen elektronischen Anlaufschaltung an einen Einphasen-Induktionsmotor mit Hauptwicklung und Hilfswicklung, sowie mit Permanentkondensator und Startkondensator, und deren wechselseitige Anordnung;
- Fig. 2: einen Schaltplan mit dem wesentlichen Schaltungsaufbau einer Ausführungsform einer erfindungsgemäßen elektronischen Anlaufschaltung;
- Fig. 3: ein Flussdiagramm zur Veranschaulichung eines beispielhaften Ablaufs des Hochlaufvorganges bei einem, mit der erfindungsgemäßen Anlaufschaltung ausgerüsteten Einphasen-Induktionsmotors der hier betrachteten Art; und
- Fig. 4: in schematischer Darstellung die wesentlichen Komponenten einer erfindungsgemäßen elektronischen Anlaufschaltungs-Einrichtung, und deren wechselseitige Verknüpfung.

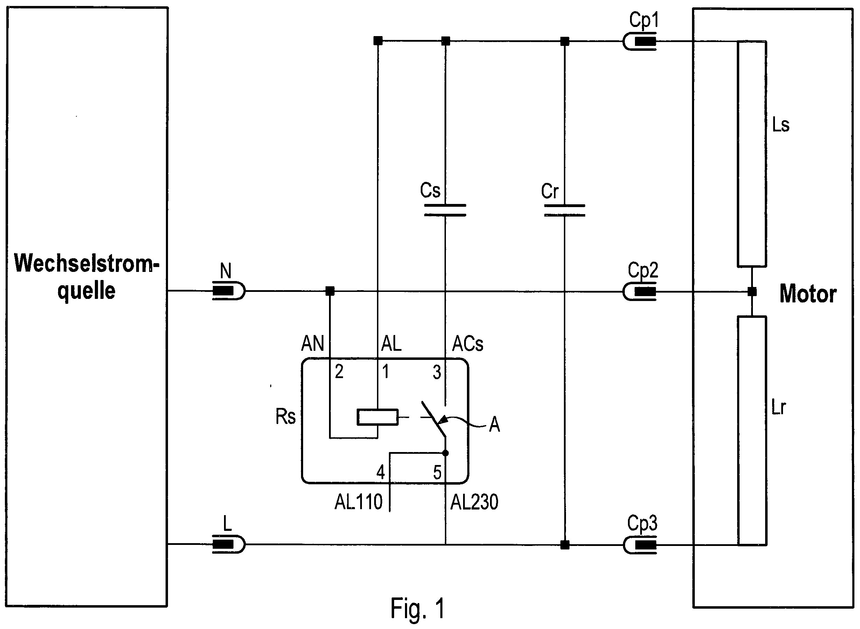

In Fig.1 ist beispielhaft ein Einphasen-Induktionsmotor mit Hauptwicklung (Lr) und Hilfswicklung (Ls) schematisch dargestellt. Beide Wicklungen sind je einseitig über den zweiten Motoranschluss (Cp2) mit dem Nullleiter (N) der Wechselstromquelle verbunden. Mit ihren anderen Enden sind die Hauptwicklung (Lr) über den dritten Motoranschluss (Cp3) direkt und die Hilfswicklung (Ls) über den ersten Motoranschluss (Cp1) mit einem in Serie vorgeschalteten Permanentkondensator (Cr) an den L-Leiter oder Außenleiter (L) der Wechselstromquelle angeschlossen. In der Hilfswicklung (Ls) bildet sich wegen der kapazitiven Vorschaltung ein Strom mit voreilender Phasenlage aus, gegenüber dem Strom in der Hauptwicklung (Lr). Dieser Strom ist durch entsprechende Dimensionierung der Permanentkapazität so eingestellt, dass die zum Betrieb gewünschte optimale Ausbildung des Drehfeldanteiles im Motor hervorgerufen wird.

Für den hochgefahrenen Motor trennt die Anlaufschaltung (Rs) durch ihren elektronischen Schalter (A) den Startkondensator (Cs) ab. Im Stillstand aber bewirkt die für den Betrieb optimierte Einspeisung der Hilfswicklung (Ls) über den Permanentkondensator Cr) nur ein sehr schwaches Drehmoment. Lange Hochlaufzeiten, in deren Verlauf der Motor hohen Strom aufnehmen würde, und große Verluste, die zu einer erheblichen Erwärmung des Motors führen würden, wären die Folge. Bereits eine geringe Belastung im Stillstand könnte gar den Hochlauf komplett verhindern.

Zur Erzeugung eines ausreichend hohen Anfahrdrehmomentes für einen sicheren und zügigen Start ist parallel zum Permanentkondensator (Cr) der Startkondensator (Cs) zu schalten, der gegenüber dem Permanentkondensator ein Vielfaches an Kapazität haben muss. Damit kann auch im Stillstand und bei niedrigen Motordrehzahlen eine zur größeren Drehmomenterzeugung notwendige Drehfeldausbildung im Motor sichergestellt werden.

Für die Anlaufschaltung (Rs) ist durch Messung der Wechselspannungsamplitude an den Anschlüssen der Hilfswicklung (Ls) die aktuelle Motordrehzahl zu erkennen. Die Anlaufschaltung ist dazu an ihrem zweiten Anlaufschaltungsanschluss (AN) mit dem Nullleiter der Wechselstromquelle (N), und damit auch mit einer Seite der Hilfswicklung (Ls) über den zweiten Motoranschluss (Cp2) verbunden. Die Hilfswicklung (Ls) ist mit ihrer anderen Seite über den ersten Motoranschluss (Cp1) an den ersten Anlaufschaltungsanschluss (AL) angeschlossen. Damit kann die Anlaufschaltung die Spannung über die Hilfswicklung (Ls) direkt mit Hilfe ihrer Spannungsmesseinrichtung (E) messen.

Die komplexe Spannung an der Hilfswicklung (Ls) ergibt sich aus der Summe der durch den Strom hervorgerufenen induktiven und Ohm'schen Spannungsabfälle und der durch den magnetisierten Motorläufer rotatorisch induzierten Spannung. Letztere liefert einen dominierenden Anteil, so dass aus der Höhe dieser Spannung mit guter Annäherung auf die aktuelle Rotordrehzahl geschlossen werden kann. In Ausnutzung dieser Motoreigenschaft schaltet die Anlaufschaltung unterhalb eines Schwellwertes für die Spannung an der Hilfswicklung (Ls) den Startkondensator (Cs) parallel zum Permanentkondensator (Cr) ein. Das Ausschalten erfolgt, wenn die Spannung an der Hilfswicklung (Ls) einen demgegenüber höheren Schwellenwert erreicht. Dieser Schwellenwert liegt nahe dem, der bei Nenndrehzahl erreicht wird, aber auch mit einem hinreichenden Pegelabstand, damit der Abschluss des Hochlaufes immer sicher erkannt wird. Die temporäre Parallelschaltung des Startkondensators (Cs) zum Permanentkondensator (Cr) führt die Anlaufschaltung über ihren dritten Anlaufschaltungsanschluss (ACs) durch, indem sie diesen über ihren elektronischen Schalter (A) mit dem L-Leiter der Wechselstromquelle verbindet. Die zugehörigen Anschlüsse der Anlaufschaltung zur Wechselstromquellenseite sind der vierte Anlaufschaltungsanschluss (AL110) oder der fünfte Anlaufschaltungsanschluss (AL230). Diese beiden Anlaufschaltungsanschlüsse sind wahlweise und alternativ anzuschließen, je nachdem, ob es sich bei der Wechselstromquelle um ein 110-Volt-Netz oder um ein 230-Volt-Netz handelt.

Wie aus Fig. 2 ersichtlich, ist die Anlaufschaltung aus neun Modulen (A) bis (I) aufgebaut, die nachfolgend beschrieben werden.

Der elektronische Schalter (A) zur temporären Parallelschaltung des Startkondensators (Cs) mit dem Permanentkondensator (Cr) verbindet dazu den Startkondensator (Cs) über den ersten Anlaufschaltungsanschluss (AL) mit dem L-Leiter der Wechselstromquelle über den vierten Anlaufschaltungsanschluss (AL110) oder über den fünften Anlaufschaltungsanschluss (AL230). Schaltelement ist ein IGBT-Transistor (T1), der den zu schaltenden Wechselstrom abhängig von der Auswahl des angeschlossenen Anlaufschaltungsanschlusses entweder über den ersten Brückengleichrichter (Gr1) oder über den zweiten Brückengleichrichter (Gr2) in gleichgerichteter Form zugeführt bekommt. Diese elektronische Schalterkonfiguration mit Reduzierung der Anforderung an das Schaltelement nur zum Schalten von Gleichstrom führt einerseits zu dem Vorteil, dass Schaltelemente für Wechselstrom, beispielsweise TRIACs oder antiparallel geschaltete Thyristoren vermieden werden können, da sie entweder nur für begrenzte Spannungsfestigkeit verfügbar oder aber nur mit erhöhtem Aufwand ansteuerbar sind. Andererseits bietet die hier gewählte Konfiguration die Möglichkeit, durch mehrere, parallel am IGBT-Transistor (T1) angeordnete Brückengleichrichter, mehrere voneinander entkoppelte Schalteingänge zu unterschiedlichen Verbrauchern zu schaffen, die alle gemeinsam durch den IGBT-Transistor geschaltet werden. Eine weitere Möglichkeit ist, die dann bestehenden wahlweise benutzbaren Schaltereingänge, hier der vierte Anlaufschaltungsanschluss (AL110) oder der fünfte Anlaufschaltungsanschluss (AL230) zur Auswahl der passenden Wicklungsanschlüsse für den Mehrspannungstransformator zur Steuerungsversorgung zu verwenden. Das Ein- und Ausschalten erfolgt weitgehend ohne Steuerleistung durch Aufschalten der entsprechenden Spannung auf das Gate des IGBT-Transistors, mit -5 bis 0 Volt für Aus und 10 bis 20 Volt für Ein.

Die transformatorische Kleinspannungsversorgung (B) ist primärseitig angeschlossen an den Nullleiter (N) der Wechselstromquelle über den zweiten Anlaufschaltungsanschluss (AN) und den L-Leiter wahlweise über den vierten Anlaufschaltungsanschluss (AL110) bei 110 Volt Nennspannung oder über den fünften Anlaufschaltungsanschluss (AL230) bei 230 Volt Nennspannung. Gegenüber einem Transformator mit festem Übersetzungsverhältnis erlaubt diese Anpassungsmöglichkeit einen reduzierten Aufwand bei der nachfolgenden Umformung in eine stabilisierte Versorgungsspannung für die Steuerung.

Die stabilisierte Gleichspannungsversorgung aus der Kleinspannung für die Steuerung (C) richtet die transformierte Kleinspannung am vierten Brückengleichrichter (Gr4) gleich mit nachfolgender einfacher Glättung an einem ersten Glättungskondensator (C3) und Stabilisierung über einen integrierten Spannungsregler (Sta1). Diese Gleichspannungsversorgung kommt mit minimalem Schaltungsaufwand aus bei Verzicht auf schaltende Bauelemente und arbeitet dennoch nur mit geringen Verlusten. Kurze Unterbrechungen der Versorgung können durch entsprechend große Kapazität des ersten Glättungskondensators (C3) aufgefangen werden.

Die Gleichspannungsversorgung aus der Kleinspannung für die Schalteransteuerung (D) richtet die transformierte Kleinspannung am dritten Brückengleichrichter (Gr3) gleich mit nachfolgender einfacher Glättung an einem zweiten Glättungskondensator (C4); diese Versorgung kann einfach und kostengünstig ohne jegliche Steuerung unstabilisiert ausgeführt werden, da die versorgte Schalteransteuerung (I) eine Spannungsbegrenzung der Ansteuerungsimpulse für den IGBT-Transistor (T1) besitzt. Die separate Versorgung über eine gesonderte Transformatorwicklung erlaubt die galvanische Verbindung dieser Spannung mit dem Emitter-Potential des IGBT-Transistors bei galvanischer Trennung zum Potential der Steuerung. Diese Trennung ist für die in dieser Schaltung verwendete Spannungsmesseinrichtung erforderlich.

Die Spannungsmesseinrichtung (E) für die Hilfswicklungsspannung zwischen dem ersten Anlaufschaltungsanschluss (AL) und dem zweiten Anlaufschaltungsanschluss (AN) erzeugt einen Spannungsmesswert durch Spannungsteilung und Gleichrichtung. Die zwischen diesen beiden Anlaufschaltungsanschlüssen liegende Spannung treibt in die durch Reihenschaltung des ersten Eingangskondensator (C1) und des zweiten Eingangskondensator (C2) gebildete Kapazität einen zur Spannungshöhe und Frequenz etwa proportionalen Strom. Durch die symmetrische Aufteilung der Eingangskondensatoren kann eine direkte niederohmige Verbindung der mit der Netzspannung verbundenen Antriebs- und Leistungskomponenten mit der Steuerung vermieden werden, was der Erhöhung der Sicherheit dient. Vorteil dieser auch sehr einfachen Anordnung gegenüber einem Spannungsteiler aus Widerständen ist hier die weitgehend verlustfreie Wandlung des Spannungssignals, da diese Spannungs-Strom-Wandlung durch kapazitive Impedanz nur Blindleistung verursacht. Diese als Strom vorliegende Messzwischengröße auf niedrigem Leistungsniveau wird am folgenden Brückengleichrichter (Gr5) in ein Gleichstromsignal gewandelt und an dem nachfolgenden Widerstandsnetzwerk in das Spannungssignal umgewandelt, das als Messwert auf den Analog-Nach-Digital-Wandler-Eingang des Mikrokontrollers geleitet wird. Diese sehr verlustarme Spannungsmessung kommt ohne aktive Bauelemente oder gar Verstärker aus und kann einerseits sehr kostengünstig und andererseits als zuverlässiger Messwandler realisiert werden. Die Messung erfolgt ohne potentialmäßige Trennung und hat Bezug auf das 0 Volt Potential aus der Steuerungsspannungsversorgung (C). Das setzt voraus, dass die angeschlossene Steuerung, die im Wesentlichen aus dem Mikrokontroller (H) besteht, keine weiteren galvanischen Verbindungen zu anderen Schaltungsteilen hat, außer zu dieser Spannungsmesseinrichtung. Die durch diese Schaltung erfasste Spannung ist die wesentliche Messgröße zur Bestimmung des drehzahlabhängigen Abschaltzeitpunktes für den Startkondensator (Cs).

Die Spannungsnulldurchgangserkennung (F) zur Erfassung der Spannungsnulldurchgänge an dem Permanentkondensator (Cr), über den ersten Anlaufschaltungsanschluss (AL) und den vierten Anlaufschaltungsanschluss (AL110) wird in einfacher Weise durch einen ersten Optokoppler (Op1) realisiert. Durch entsprechend ausgelegten Vorwiderstand arbeitet die Eingangs-Leuchtdiode als im Wesentlichen vorzeichenabhängig von der angelegten Wechselspannung. Die erforderliche galvanisch getrennte Übertragung der Vorzeicheninformation auf einen Port des Mikrokontrollers erfolgt mit demselben Bauelement. Für diese Messwerterfassung wird so ein minimaler Schaltungsaufwand benötigt. Die Kenntnis der Spannungsnulldurchgänge kann einerseits zur Feststellung der Frequenz der angeschlossenen Wechselstromquelle ausgewertet werden, indem zur Periodendauermessung die Zeit zwischen zwei gleichartigen Flanken bestimmt wird, und aus der Periodendauer die Frequenz berechnet wird. Weiterhin könnte die Abschaltung des Startkondensators dann bei kleinem Strom oder sogar etwa 0 Ampere erfolgen, wenn im Spannungsmaximum am Kondensator geschaltet würde, also etwa in der zeitlichen Mitte zwischen den Nulldurchgängen. Dieses würde aber wiederum dazu führen, dass der abgeschaltete Startkondensator (Cs) mit maximaler Ladung zurückgelassen würde, was zu hoher, doppelter nachfolgender Spannungsbelastung des elektronischen Schalters führen würde durch Addition mit der zeitweilig inversen Spannung am Permanentkondensator (Cr) ; außerdem würde die Aufgabe erschwert werden, beim Einschalten den Zeitpunkt zu treffen, an dem am Permanentkondensator (Cr) dieselbe Spannung anliegt, wie am Startkondensator (Cs). Aus Versuchen werden daher vorzugsweise Kompromisswerte für den Abschaltzeitpunkt nach dem Nulldurchgang ermittelt, bei dem noch eine relativ geringe Ladungsspannung am Startkondensator (Cs) vorhanden ist, während der zu unterbrechende Strom keine zu hohe Belastung für den Schaltvorgang darstellt, insbesondere wegen des durch die schnelle Stromänderung an der Leitungsinduktivität hervorgerufenen Spannungspulses. Das Einschalten erfolgt dann ebenfalls immer zu einem festen Zeitpunkt bezogen auf den Nulldurchgang, um immer reproduzierbar dabei nur einen begrenzten Einschaltstromstoß zwischen beiden Kondensatoren über den elektronischen Schalter hervorzurufen.

Der Überwachungsschaltung (G) der Steuerungsversorgungsspannung ist ein Ohm'scher Spannungsteiler, dessen Ausgang an einen Port des Mikrokontrollers angeschlossen ist. Bei Unterschreitung einer für den Betrieb erforderlichen Versorgungsspannung muss der elektronische Schalter sicher in den Aus-Zustand gebracht werden.

Der Mikrokontroller (H) zur Erzeugung des Steuersignals für den elektronischen Schalter in Abhängigkeit von zugeleiteten Messwerten und vorher ermittelten, gespeicherten Daten arbeitet entsprechend einem Programm, dass in einem nicht flüchtigen Speicher (Flash oder EPROM, hier insbesondere EEPROM) abgelegt wird und damit auch nach jeder Trennung von der Energieversorgung immer unverändert zur Verfügung steht. Dieses Programm bestimmt alle Abläufe, die für den bestimmungsgemäßen Gebrauch der Anlaufschaltung erforderlich sind. Für diese Anlaufschaltung sind Mikrokontroller für einfachste Anforderungen anwendbar, vorzugweise in 8-bit Architektur, da weder komplexe mathematische Algorithmen, noch nennenswerte Datenmengen verarbeitet werden und auch die Anforderung an Rechenzeit und zeitliche Auflösung sehr gering ist. Diese Kontroller stehen als sogenannte Einchip-Kontroller zur Verfügung, sie beinhalten also außer dem eigentlichen Prozessor auch alle notwendigen analogen (Analog-Nach-Digital-Wandler) und digitalen Ports, Zeittaktgeber, RAM (Arbeitsspeicher) und nicht flüchtigen Speicher für Programm und Datensätze. Die Ansteuerung des IGBT-Transistors (T1) erfolgt über einen digitalen Port durch einfaches Ein/Aus-Signal an die nachgeschaltete Schaltersteuerung. Die für einen sicheren Betrieb der Anlaufschaltung erforderlichen minimalen zeitlichen Abstände zwischen den Ein- und Ausschaltsignalen, sowie deren minimale und maximale Länge sowie entsprechende Verriegelungen beim Start des Kontrollers, beim Abschalten oder dem Verlust der Spannungsversorgung sind im Programm festgelegt. Der aus der Spannungsmesseinrichtung (E) zugeführte Messwert der Spannung an der Hilfswicklung wird dahingehend ausgewertet, um daraus die Nennspannung des Motors abzuleiten. Aus dem aus der Spannungsnulldurchgangserkennung (F) zugeführten Vorzeichensignal der Spannung am Permanentkondensator (Cr) wird die Frequenz der Wechselstromquelle bestimmt. Aus diesen beiden Größen, Nennspannung und Nennfrequenz, wird der zugehörige, im nicht-flüchtigen Speicher abgelegte Datensatz bestimmt, auf dem basierend die Steuerung erfolgt: Die Spannung an der Hilfswicklung, bei der abgeschaltet wird, die Spannung an der Hilfswicklung bei der eingeschaltet wird, die Zeitpunkte bezogen auf den Nulldurchgang bei denen das Einschalten und Ausschalten ausgeführt wird.

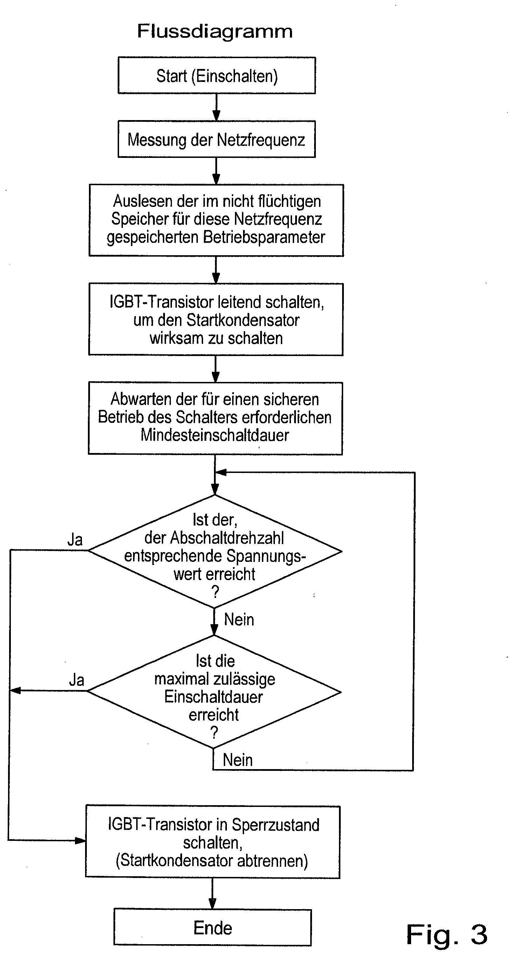

Das Flussdiagramm nach Fig. 3 beschreibt beispielhaft den Ablauf des Programms im Mikrokontroller zur Ansteuerung des IGBT-Transistors (T1) beim Hochlauf des Motors.

Die Schalteransteuerung (I) für die Übertragung des Steuersignals vom Mikrokontroller an das Gate des IGBT-Transistors (T1) erhält das Steuersignal vom Mikrokontroller-Port galvanisch getrennt über den zweiten Optokoppler (Op2). Dieser Optokoppler schaltet die unstabilisierte Versorgungsspannung über ein Widerstandsnetzwerk und eine Spannungsbegrenzung durch Zenerdiode auf das Gate des IGBT-Transistors (T1). Zusätzlich zu dem Optokoppler (Op2) enthält diese Schaltung nur wenige passive Bauelemente. Die direkte Begrenzung des mit höherer Spannung bereitgestellten Steuersignals direkt am Eingang des IGBT-Transistors (T1) bewirkt eine hohe Sicherheit gegenüber Störungen beispielsweise durch elektromagnetische Einkopplung aus dem Leistungskreis.

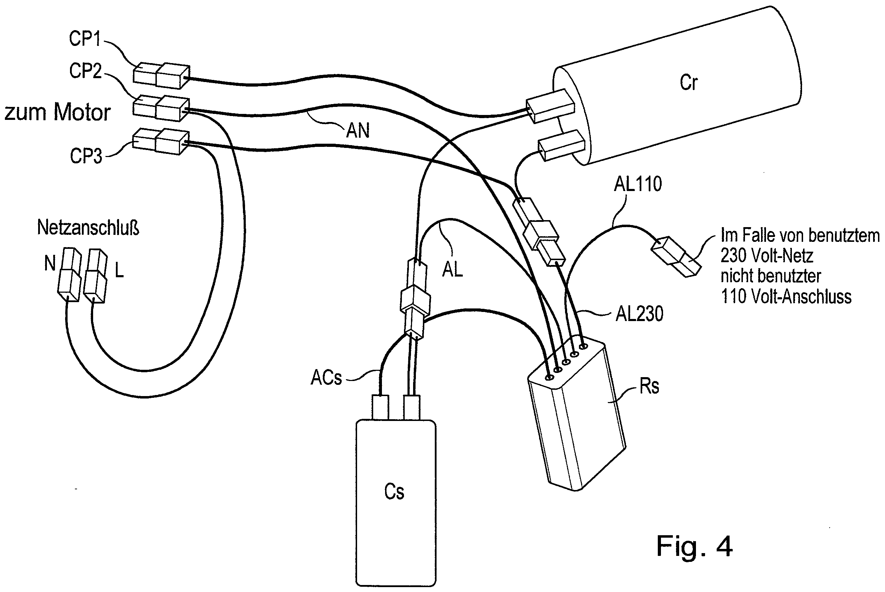

Die Fig. 4 zeigt die Bestandteile einer erfindungsgemäßen elektronischen Anlaufschaltungs-Einrichtung, umfassend die elektronische Anlaufschaltung (Rs), einen Permanentkondensator (Cr) und einen Startkondensator (Cs), sowie deren elektrische Verbindung unter einander gemäß dem Schema nach Fig. 1.

## Patentansprüche

1. Elektronische Anlaufschaltung
zum Starten eines Einphasen-Induktionsmotors,
der einen Stator mit wenigstens einer Hauptwicklung (Lr) und einer Hilfswicklung (Ls) sowie einen Permanentkondensator (Cr) und einen nur kurzzeitig während der Anlaufphase zuschaltbaren Startkondensator (Cs) aufweist,
wobei:
- dieser Motor einen ersten Motoranschluss (Cp1), einen zweiten Motoranschluss (Cp2) und einen dritten Motoranschluss (Cp3) hat;
- die Hauptwicklung (Lr) über den dritten Motoranschluss (Cp3) direkt an einen Außenleiter (L) der Wechselstromquelle anschließbar ist sowie über den zweiten Motoranschluss (Cp2) direkt an den Nullleiter (N) der Wechselstromquelle anschließbar ist;
- die Hilfswicklung (Ls) über den ersten Motoranschluss (Cp1) und den in Serie dazu geschalteten Permanentkondensator (Cr) direkt an den Außenleiter (L) der Wechselstromquelle anschließbar ist sowie über den zweiten Motoranschluss (Cp2) direkt an den Nullleiter (N) der Wechselstromquelle anschließbar ist; und
- die elektronische Anlaufschaltung (Rs) einen elektronischen Schalter (A) hat, welcher den parallel zum Permanentkondensator (Cr) angeordneten Startkondensator (Cs) zuschaltet oder trennt;
wobei:
- dieser elektronische Schalter (A) einen IGBT-Transistor (T1) und einen ersten Brückengleichrichter (Gr1) aufweist, dessen Plus-Anschluss mit dem IGBT-Kollektor, dessen Minus-Anschluss mit dem IGBT-Emitter und dessen erster Wechselstrom-Anschluss über einen vierten Anlaufschaltungs-Anschluss (AL110) mit dem Außenleiter (L) der Wechselstromquelle, und dessen zweiter Wechselstromanschluss über einen dritten Anlaufschaltungsanschluss (ACs) mit dem Startkondensator (Cs) verbunden ist;
- ferner eine Steuereinrichtung vorhanden ist, welche ein Erreichen der Betriebsdrehzahl durch Spannungsmessung erfasst und dementsprechend das Gate des IGBT-Transistors (T1) mit einem Steuersignal zum Ein- und Ausschalten des IGBT-Transistors (T1) versorgt, wobei durch Vornahme des Schaltvorganges in definiertem Zeitabstand zum Spannungsnulldurchgang am Permanentkondensator (Cr) eine optimierte Schalterbelastung erreicht wird; und
- eine an die Wechselstromquelle (L, N) angeschlossene Kleinspannungsversorgung (B) für die Komponenten der elektronischen Anlaufschaltung vorhanden ist;
**dadurch gekennzeichnet, dass**
- der elektronische Schalter (A) einen zweiten Brückengleichrichter (Gr2) aufweist, der in gleicher Weise wie der erste Brückengleichrichter (Gr1) aufgebaut und mit dem IGBT-Transistor (T1) verbunden ist, und dessen erster Wechselstromanschluss mit einem fünften Anlaufschaltungsanschluss (AL230) verbunden ist, der alternativ zu dem vierten Anlaufschaltungsanschluss (AL110) mit dem Außenleiter (L) der Wechselstromquelle verbunden werden kann, und dessen zweiter Wechselstromanschluss über den dritten Anlaufschaltungsanschluss (ACs) mit dem Startkondensator (Cs) verbunden ist;
- im Falle einer ersten Nennspannung, beispielsweise 110 Volt, der Wechselstromquelle (L, N) der passende Transformatorwicklungsanschluss der Kleinspannungsversorgung (B) über den vierten Anlaufschaltungsanschluss (AL110) mit dem Außenleiter (L) der Wechselstromquelle verbunden wird, und im Falle einer zweiten Nennspannung, beispielsweise 230 Volt, der Wechselstromquelle (L, N) der passende Transformatorwicklungsanschluss der Kleinspannungsversorgung (B) über den fünften Anlaufschaltungsanschluss (AL230) mit dem Außenleiter (L) der Wechselstromquelle verbunden wird;
- die Steuereinrichtung einen Mikrokontroller (H) umfasst, der die Motordrehzahl-abhängige Spannung an einer der Motorwicklungen (Ls oder Lr) erfasst und bei Erreichen eines vorgegebenen Schwellenwertes den IGBT-Transistor (T1) in den Sperrzustand schaltet, und der lernt, mit welcher der beiden alternativen Nennspannungen die Wechselstromquelle (L, H) betrieben wird und danach die dazu passenden vorgegebenen und abgespeicherten Spannungsamplituden, bei denen der elektronische Schalter (A) in den Durchlasszustand oder in den Sperrzustand geschaltet werden soll, zum Schalten des IGBT-Transistors (T1) auswählt; und
- dieser Mikrokontroller (H) basierend auf den erfassten Spannungs-Nulldurchgängen die Umschaltungen des IGBT-Transistors (T1) zu einem vorgegebenen nulldurchgangsbezogenen Zeitpunkt ausgibt; und
- dieser Mikrokontroller (H) die unterschiedlichen Nennfrequenzen, beispielsweise 50 oder 60 Hertz, der Wechselstromquelle durch Messung der Zeit zwischen zwei Nulldurchgängen, insbesondere zwischen zwei aufeinanderfolgenden Nulldurchgängen ermittelt und danach die dazu passenden vorgegebenen und abgespeicherten frequenzabhängigen Wartezeiten, die zwischen den gemessenen Spannungsdurchgängen und der Ausführung des Schaltvorganges vorgesehen sind, zum Schalten des IGBT-Transistors (T1) auswählt.

2. Elektronische Anlaufschaltung nach Anspruch 1,
**dadurch gekennzeichnet, dass**
der Einphasen-Induktionsmotor mit Wechselstrom einer Nennspannung von 110 Volt oder 230 Volt sowie mit einer Nennfrequenz von 50 Hertz oder 60 Hertz betreibbar ist, und die Wechselstromquelle (L, N) entsprechenden Wechselstrom bereitstellt; und
die elektronische Anlaufschaltung (Rs) fünf Anlaufschaltungsanschlüsse aufweist, nämlich:
- einen ersten Anlaufschaltungsanschluss (AL), über welchen eine Spannungsmesseinrichtung (E) der Anlaufschaltung (Rs) mit dem Außenleiter (L) der Wechselstromquelle am ersten Motoranschluss (Cp1) verbunden ist;
- einen zweiten Anlaufschaltungsanschluss (AN), über welchen die Spannungsmesseinrichtung (E) der Anlaufschaltung (Rs) mit dem Nullleiter (N) der Wechselstromquelle verbunden ist;
- einen dritten Anlaufschaltungsanschluss (ACs), über den der Schalter (A) mit dem Anlaufkondensator (Cs) verbunden ist, wobei der IGBT-Transistor (T1) diesen Anlaufschaltungsanschluss (ACs) stromführend oder stromlos schaltet;
- einen vierten Anlaufschaltungsanschluss (AL110), der mit dem Außenleiter (L) der Wechselstromquelle verbunden ist, sofern diese Wechselstromquelle eine Nennspannung von 110 Volt liefert; und
- einen fünften Anlaufschaltungsanschluss (AL230), der an Stelle des und alternativ zum Anlaufschaltungsanschluss (AL110) mit dem Außenleiter (L) der Wechselstromquelle verbunden ist, sofern diese Wechselstromquelle eine Nennspannung von 230 Volt liefert.

3. Elektronische Anlaufschaltung nach Anspruch 2,
**dadurch gekennzeichnet, dass**
in der Spannungsmesseinrichtung (E) der Anlaufschaltung (Rs) die Amplitude der Nennspannung der Wechselstromquelle (L, N) bestimmt wird, wozu
- das am ersten Anlaufschaltungsanschluss (AL) anliegende Potential einem ersten Kondensator (C1) zugeführt wird;
- das am zweiten Anlaufschaltungsanschluss (AN) anliegende Potential einem zweiten Kondensator (C2) zugeführt wird;
- die an den Ausgängen dieser beiden Kondensatoren (C1 und C2) anfallenden Spannungen den Wechselstromeingängen eines fünften Brückengleichrichters (Gr5) zugeführt werden; und
- dessen Gleichstrom-Ausgangssignale über einen Spannungsteiler und Spannungsbegrenzer (R3, R4, R2 und D1) einem Analog-nach-Digital-Wandler-Eingang des Mikrokontrollers (H) zugeführt werden.

4. Elektronische Anlaufschaltung nach Anspruch 3,
**dadurch gekennzeichnet dass,**
die zwischen dem ersten Anlaufschaltungsanschluss (AL) und dem vierten Anlaufschaltungsanschluss (AL110) oder dem fünften Anlaufschaltungsanschluss (AL230) anliegende Spannung über Vorwiderstände der Leuchtdiode eines ersten Optokopplers (Op1) zugeführt wird, der ein rechteckiges Ausgangssignal liefert, dessen Vorzeichen dem Vorzeichen des Verlaufes der Spannung am Permanentkondensator (Cr) entspricht, und dessen Flanken etwa zeitgleich zu den Nulldurchgängen dieses Wechselspannungsverlaufes am Permanentkondensator sind; und
dieses Rechtecksignal einem Digitaleingang des Mikrokontrollers (H) zugeführt wird.

5. Elektronische Anlaufschaltung nach einem der Ansprüche 1 bis 4,
**dadurch gekennzeichnet, dass**
- die Kleinspannungsversorgung (B) transformatorisch angeschlossen ist und eine Zwei-Spannungs-Primärwicklung aufweist, die wahlweise an denjenigen Anlaufschaltungsanschluss (AL110 oder AL230) anschließbar ist, welcher der von der Wechselstromquelle (L, N) bereitgestellten Nennspannung entspricht;
- diese Zwei-Spannungs-Primärwicklung mit einer ersten Sekundärwicklung gekoppelt ist, die Wechselkleinspannung für die Versorgung des Mikrokontrollers (H) bereitstellt;
- diese Wechselkleinspannung in einem vierten Brückengleichrichter (Gr4) zu einem Gleichspannungssignal von etwa 20 Volt gleichgerichtet wird, das über ein Stabilisatorelement (Sta1) auf 5 Volt stabilisiert dem Mikrokontroller (H) zugeführt wird; und
dieses Gleichspannungssignal noch vor dem Stabilisatorelement (Sta1) angezapft und einer Spannungsnulldurchgangserkennung (F) zugeführt wird, die das resultierende Messsignal einem Eingang des Mikrokontrollers (H) zuführt, damit dieser bei einem allfälligen Zusammenbruch der Spannungsversorgung den IGBT-Transistor (Tr1) sicher in den Sperrzustand schaltet.

6. Elektronische Anlaufschaltung nach Anspruch 5,
**dadurch gekennzeichnet, dass**
die Zwei-Spannungs-Primärwicklung der Kleinspannungsversorgung (B) mit einer zweiten Sekundärwicklung gekoppelt ist, die Wechselkleinspannung für die Versorgung des IGBT-Transistors (Tr1) bereitstellt;
diese Wechselkleinspannung in einem dritten Brückengleichrichter (Gr3) zu einem Gleichstromsignal von etwa 20 Volt gleichgerichtet wird, das einem zweiten Optokoppler (Op2) zugeführt wird, dessen Leuchtdiode ein vom Mikrokontroller (H) ausgegebenes Schaltsignal zugeführt wird, das schließlich galvanisch getrennt dem Gate des IGBT-Transistors (Tr1) zugeführt wird.

7. Elektronische Anlaufschaltung nach einem der Ansprüche 1 bis 6,
**dadurch gekennzeichnet, dass**
die elektronische Anlaufschaltung (Rs) einen Mikrokontroller (H) aufweist,
- der die Motordrehzahl-abhängige Spannung an einer der Motorwicklungen (Ls, Lr) erfasst und bei Erreichen eines vorgegebenen Schwellenwertes den IGBT Transistor (T1) ausschaltet; und
- der lernt, mit welcher der beiden alternativen Nennspannungen die Wechselstromquelle (L, N) betrieben wird, und der danach die dazu passenden vorgegebenen und abgespeicherten Spannungsamplituden, bei denen der elektronische Schalter (A) in den Durchlasszustand oder in den Sperrzustand geschaltet werden soll, zum Schalten des IGBT-Transistors (T1) auswählt; und
- der, basierend auf den erfassten Spannungsnulldurchgängen die Umschaltungen des IGBT-Transistors (T1) zu einem vorgegebenen Nulldurchgangsbezogenen Zeitpunkt ausgibt; und
- der die unterschiedlichen Nennfrequenzen, beispielsweise 50 oder 60 Hertz, der Wechselstromquelle (L, N) durch Messung der Zeit zwischen zwei aufeinanderfolgenden Nulldurchgängen ermittelt und danach die dazu passenden vorgegebenen und abgespeicherten frequenzabhängigen Wartezeiten, die zwischen den gemessenen Spannungsdurchgängen und der Ausführung des Schaltvorganges vorgesehen sind, zum Schalten des IGBT-Transistors (T1) auswählt und ausgibt.

8. Elektronische Anlaufschaltung nach Anspruche 7,
**dadurch gekennzeichnet, dass**
im Mikrokontroller (H) mehrere Datensätze abgespeichert sind, welche vorher ermittelte, vorgegebene und fest eingespeicherte Werte enthalten,
a) für diejenigen Spannungsamplituden, bei denen der elektronische Schalter (A) in den Durchlasszustand oder in den Sperrzustand geschaltet werden soll; und
b) für die Wartezeiten, die zwischen den gemessenen Spannungsnulldurchgängen und der Ausführung des Schaltvorgangs vorgesehen sind; und
für die unterschiedlichen Nennspannungen und unterschiedlichen Frequenzen der Wechselstromquelle (L, N) entsprechende Datensätze gebildet und im Mikrokontroller (H) abgespeichert sind und zwischen diesen Datensätzen nach Maßgabe der in der Spannungsmesseinrichtung (E) erhaltenen Messwerte umgeschaltet wird.

9. Elektronische Anlaufschaltung nach Anspruch 8,
**dadurch gekennzeichnet, dass**
die Umschaltung zwischen den Datensätzen für unterschiedliche Nennspannungen automatisch erfolgt in Abhängigkeit vom gemessenen Spannungsverlauf beim Hochlaufen der Motordrehzahl; und
die Umschaltung zwischen den Datensätzen für unterschiedliche Nennfrequenzen automatisch erfolgt nach Messung der Zeitabstände zwischen zwei Nulldurchgängen des Spannungsverlaufes, insbesondere zwischen zwei aufeinanderfolgenden Nulldurchgängen des Spannungsverlaufes.

10. Elektronische Anlaufschaltung nach einem der Ansprüche 7 bis 9,
**dadurch gekennzeichnet, dass**
der Mikrokontroller (H) zur Erfassung des Hochlaufzustandes der Motordrehzahl die zwischen dem ersten Anlaufschaltungsanschluss (AL) und dem zweiten Anlaufschaltungsanschluss (AN) anliegende Wechselspannungsamplitude überwacht, und
den elektronischen Schalter (A) solange in einen Durchlasszustand schaltet, solange ein vorher festgelegter, vorgegebener und abgespeicherter Schwellenwert für diese Spannungsamplitude nicht überschritten wird, und den elektronischen Schalter (A) in den Sperrzustand schaltet, nachdem dieser Schwellenwert überschritten ist.

11. Elektronische Anlaufschaltungs-Einrichtung
zum Starten eines Einphasen-Induktionsmotors,
der einen Stator mit wenigstens einer Hauptwicklung (Lr) und einer Hilfswicklung (Ls) sowie einen Permanentkondensator (Cr) und einen nur kurzzeitig während der Anlaufphase zuschaltbaren Startkondensator (Cs) aufweist, wobei:
- dieser Motor einen ersten Motoranschluss (Cp1), einen zweiten Motoranschluss (Cp2) und einen dritten Motoranschluss (Cp3) hat;
- die Hauptwicklung (Lr) über den dritten Motoranschluss (Cp3) direkt an einen Außenleiter (L) der Wechselstromquelle anschließbar ist sowie über den zweiten Motoranschluss (Cp2) direkt an den Nullleiter (N) der Wechselstromquelle anschließbar ist;
- die Hilfswicklung (Ls) über den ersten Motoranschluss (Cp1) und den in Serie dazu geschalteten Permanentkondensator (Cr) direkt an den Außenleiter (L) der Wechselstromquelle anschließbar ist sowie über den zweiten Motoranschluss (Cp2) direkt an den Nullleiter (N) der Wechselstromquelle anschließbar ist; und
- die elektronische Anlaufschaltung (Rs) einen elektronischen Schalter (A) hat, welcher den parallel zum Permanentkondensator (Cr) angeordneten Startkondensator (Cs) zuschaltet oder trennt;
**dadurch gekennzeichnet, dass**
eine elektronische Anlaufschaltung (Rs) nach einem der vorherigen Ansprüche 1 bis 10 zusammen mit dem Permanentkondensator (Cr) und/oder mit dem Startkondensator (Cs) ein selbständig handhabbares Produkt bilden, das für den Anbau an oder den Einbau in einen derartigen Einphasen-Induktionsmotor bestimmt ist.

12. Elektronische Anlaufsteuerungs-Einrichtung nach Anspruch 11,
**dadurch gekennzeichnet, dass**
der Permanentkondensator (Cr) ein Folienkondensator oder ein Metallpapierkondensator ist, der je selbstheilende Eigenschaften aufweist und der je eine Kapazität im Bereich von etwa 1 µF bis etwa 50 µF (Mikrofarad) hat.

13. Elektronische Anlaufsteuerungs-Einrichtung nach Anspruch 11 oder 12,
**dadurch gekennzeichnet, dass**
der Startkondensator (Cs) ein bipolarer bzw. nicht polarisierter Elektrolytkondensator ist, der die 10-fache bis 50-fache Kapazität des Permanentkondensators (Cr) aufweist.

14. Einphasen-Induktionsmotor
der einen Stator mit wenigstens einer Hauptwicklung (Lr) und mit einer Hilfswicklung (Ls) sowie einen Permanentkondensator (Cr) und einen nur kurzzeitig während der Anlaufphase zuschaltbaren Startkondensator (Cs) aufweist,
wobei:
- dieser Motor einen ersten Motoranschluss (Cp1), einen zweiten Motoranschluss (Cp2) und einen dritten Motoranschluss (Cp3) hat;
- die Hauptwicklung (Lr) über den dritten Motoranschluss (Cp3) direkt an einen Außenleiter (L) der Wechselstromquelle anschließbar ist sowie über den zweiten Motoranschluss (Cp2) direkt an den Nullleiter (N) der Wechselstromquelle anschließbar ist;
- die Hilfswicklung (Ls) über den ersten Motoranschluss (Cp1) und den in Serie dazu geschalteten Permanentkondensator (Cr) direkt an den Außenleiter (L) der Wechselstromquelle anschließbar ist sowie über den zweiten Motoranschluss (Cp2) direkt an den Nullleiter (N) der Wechselstromquelle anschließbar ist; und
- die elektronische Anlaufschaltung (Rs) einen elektronischen Schalter (A) hat, welcher den parallel zum Permanentkondensator (Cr) angeordneten Startkondensator (Cs) zuschaltet oder trennt;
**dadurch gekennzeichnet, dass**
eine elektronische Anlaufschaltung (Rs) nach einem der Ansprüche 1 bis 10 vorgesehen ist.

15. Einphasen-Induktionsmotor nach Anspruch 14,
**dadurch gekennzeichnet, dass**
dieser Einphasen-Induktionsmotor für eine Leistung von etwa 100 Watt bis etwa 2000 Watt ausgelegt ist.

## Claims

1. An electronic starting circuit
for starting a single-phase induction motor,
comprising a stator having at least one main winding (Lr) and an auxiliary winding (Ls) and a permanent capacitor (Cr) and a start capacitor (Cs) which can be switched on only briefly during the start-up phase,
wherein:
- this motor has a first motor terminal (Cp1), a second motor terminal (Cp2) and a third motor terminal (Cp3);
the main winding (Lr) is directly connectable via the third motor terminal (Cp3) to an AC power source (L) and is directly connectable via the second motor terminal (Cp2) to an AC zero conductor (N);
- the auxiliary winding (Ls) is directly connectable via the first motor terminal (Cp1) and the serially connected permanent capacitor (Cr) to the AC power source (L) and is directly connectable via the second motor terminal (2) to the AC zero conductor (N); and
- the electronic starting circuit (Rs) has an electronic switch (A) which connects or separates the start capacitor (Cs) which is arranged parallel to the permanent capacitor (Cr);
wherein:
- this electronic switch (A) comprises an IGBT transistor (T1) and a first bridge rectifier (Gr1) having its plus terminal connected to the IGBT collector and having its minus terminal connected to the IGBT emitter and having its first AC terminal connected via a first starting circuit terminal (AL110) to the AC power source (L) and having its second AC terminal connected via a third starting circuit terminal (ACs) to the start capacitor (Cs);
- furthermore, a control device is provided which detects reaching the operating rotation speed by voltage measurement and accordingly supplies the gate of the IGBT transistor (T1) with a control signal for switch on and off the IGBT transistor (T1), hereby achieving an optimized switch load by performing the switching operation in a defined time distance to voltage zero crossing at the permanent capacitor (Cr); and
- providing a low-voltage supply (B) connected to the AC source (L, N) for supplying the components of the electronic starting circuit;
**characterized in that**
- the electronic switch (A) comprises a second bridge rectifier (Gr2) constructed in the same way as the first bridge rectifier (Gr1) and being connected to the IGBT transistor (T1), and having its first AC terminal connected with a fifth starting circuit terminal (AL230), which may be connected to the AC power source (L) alternatively to the fourth starting circuit terminal, and having its second AC terminal connected via the third starting circuit terminal (ACs) to the start capacitor (Cs);
- in the case, the AC power source (L, N) provides a first rated voltage, for example 110 volts, the appropriate transformer winding terminal of the low-voltage supply (B) may be connected via the fourth starting circuit terminal (AL110) with the AC power source (L),
in the case, the AC power source (L, N) provides a second rated voltage, for example 230 volts, the appropriate transformer winding terminal of the low-voltage supply (B) may be connected via the fifth starting circuit terminal (AL230) with the AC power source (L);
- the control device comprises a microcontroller (H) which detects the motor rotation speed-dependent voltage on one of the motor windings (Ls or Lr), and which, when reaching a predetermined threshold, switches the IGTB transistor (T1) in the locked state, and which learns which one of the two alternative rated voltages is provided by the AC power source (L, H), and which selects the matching predetermined and stored voltage amplitudes defined to switch the electronic switch (A) into its on-state or its locked state for switching the IGBT transistor (T1); and
- based upon the such detected voltage zero crossing, this microcontroller (H) provides the switching steps of the IGBT Transistor (T1) at a predetermined and zero crossing-dependent time moment; and
- this microcontroller (H) determines the different rated frequencies, for example 50 or 60 Hertz of the AC source, by measuring the time period between two zero crossings, in particular between two consecutive zero crossings, and then selects the matching predetermined and stored frequency-dependent holding periods, provided between the measured voltage crossings and execution of the switching operation, for switching the IGBT transistor (T1).

2. The electronic starting circuit according to claim 1,
**characterized in that**
the single-phase induction motor is operable with AC of a rated voltage of 110 volts or 230 volts and with a rated frequency of 50 Hertz or 60 Hertz, and the AC source (L, N) provides corresponding alternating current; and
the electronic starting circuit (Rs) comprises five starting circuit terminals, namely
- a first starting circuit terminal (AL) via which a voltage measuring means (E) of the starting circuit (RS) is connected with AC power source (L) at the first motor terminal (Cp1);
- a second starting circuit terminal (AN) via which the voltage measuring means (E) of the starting circuit (Rs) is connected with the neutral conductor (N) of the AC power source;
- a third starting circuit terminal (ACs) via which the switch (A) is connected with the starting capacitor (Cs), wherein the IGBT-transistor (T1) switches this starting circuit terminal (ACs) current-carrying or current-less;
- a fourth starting circuit terminal (AL110) connected to the AC power source (L) when said AC power source supplies a rated voltage of 110 volts; and
- a fifth starting circuit terminal (AL230) connected with the AC power source (L) of the AC source instead of and alternatively to the starting circuit terminal (AL110) when said AC source supplies a rated voltage of 230 volts.

3. The electronic starting circuit according to claim 2,
**characterized in that,**
the amplitude of the rated voltage of the AC power source (L, N) is determined within the measuring device (E), whereby
- the potential applied to the first starting circuit terminal (AL) is supplied to a first capacitor (C1);
- the potential applied to the second starting circuit terminal (AN) is supplied to a second capacitor (C2);
- the voltages applied to the terminals of these both capacitors (C1 and C2) are supplied to the AC inputs of a fifth bridge rectifier (Gr5); and
- whose DC output signals are fed via a voltage divider and voltage limiter (R3, R4, R2 and D1) to an analog-to-digital-converter input of the microcontroller (H).

4. The electronic starting circuit according to claim 3,
**characterized in that**
the voltage applied between the first starting circuit terminal (AL) and the fourth starting circuit terminal (AL110) or the fifth starting circuit terminal (AL230) is applied via protective resistors to the light emitting diode of a first opto-coupler (Op1), which provides a rectangular output signal whose sign corresponds to the sign of the voltage waveform course at the permanent capacitor (Cr), and whose edges are approximately simultaneously with the zero crossings of this alternating voltage waveform course at the permanent capacitor; and
this rectangular signal is applied to a digital input of the microcontroller (H).

5. The electronic starting circuit according to one of the claims 1 to 4, **characterized in that**
- the low-voltage supply (B) is transformer connected and comprises a two-voltages primary winding which is selectively connectable to said starting circuit terminal (AL110 or AL230), which corresponds to the rated voltage supplied by the AC power source (L, N);
- this two-voltages primary winding is coupled to a first secondary winding which supplies an AC low-voltage for the microcontroller (H);
- said AC low-voltage is rectified in a fourth bridge rectifier (Gr4) to a DC voltage signal of about 20 volts, which is stabilized by means of a stabilizer element (STa1) to 5 volts and supplied to the microcontroller (H); and
this DC voltage signal is tapped before the stabilizer element (Sta1) and then supplied to a zero voltage crossing detection means (F) which supplies the resulting measurement signal to an input of the microcontroller (H) which, in case of a possible voltage breakdown, safely switches the IGTB transistor (Tr1) in the locked state.

6. The electronic starting circuit according to claim 5,
**characterized in that**
the two-voltages primary winding of the low-voltage supply (B) is coupled with a second secondary winding which provides AC low-voltage for supply of the IGTB transistor (T1);
said AC low-voltage is rectified in a third bridge rectifier (Gr3) to a DC voltage signal of about 20 volts, which is supplied to a second opto-coupler (Op2), whose light emitting diode is supplied with a microcontroller (H) provided switching signal which is, electrically isolated, supplied to the gate of the IGTB transistor (T1).

7. The electronic starting circuit according to one of the claims 1 to 6,
**characterized in that**
the electronic starting circuit (Rs) comprises a microcontroller (H),
- which detects the motor rotation speed-dependent voltage present at one of the motor windings (Ls, Lr) and which turns off the IGTB transistor (T1) when a predetermined threshold value has been reached;
- which learns which one of the two alternative rated AC voltages of the AC power source (L, N) is used, and which thereupon selects the matching predetermined and stored voltage amplitudes defined to switch the electronic switch (A) to its on-state or its locked state for switching the IGTB transistor (T1); and
- which, based on the detected voltage zero crossings, outputs the switching of the IGBT transistor (T1) at a predetermined zero crossing- related time moment; and
- which detects the different rated frequencies, for example 50 or 60 Hertz of the AC power source (L, N) by measuring the time period between two consecutive zero crossings and thereupon selects and outputs the matching and stored frequency-dependent holding periods provided between the measured voltage crossings and execution of the switching operation, for switching the IGBT transistor (T1).

8. The electronic starting circuit according to claim 7,
**characterized in that**
within the microcontroller (H) a plurality of data sets are stored, which contain previously determined, predetermined and permanently stored values
a) for those voltage amplitudes at which the electronic switch (A) should be switched to its on-state or to its blocked stated; and
b) for the holing periods provided between the measured voltage zero crossings and the execution of the switching operation; and
corresponding data sets for the different rated voltages and for the different frequencies of the AC power source (L, N) are formed and stored within the microcontroller (H), and switching operations are made between these data sets in accordance to obtained measurement values in the voltage measuring device (E).

9. The electronic starting circuit according to claim 8,
**characterized in that**
the switching between the data sets for different rated voltages is carried out automatically in dependence of the measured voltage waveform course when running up motor rotational speed; and
the switching between the data sets for different rated frequencies is carried out automatically subsequent to measuring the time periods between two zero crossings of the voltage waveform course, in particular between two consecutive zero crossings of the voltage waveform course.

10. The electronic starting circuit according to one of claims 7 to 9,
**characterized in that**
the microcontroller (H) for detecting the running up state of the motor rotational speed monitors the AC voltage amplitude applied between the first starting circuit terminal (AL) and the second starting circuit terminal (AN); and
switches the electronic switch (A) as long in an on-state as long as a previously determined, predetermined and stored threshold value for this voltage amplitude is not exceeded; and
switches the electronic switch (H) in a blocked state subsequently to exceeding this threshold value.

11. An electronic starting circuit device
for starting a single-phase induction motor
comprising a stator having at least one main winding (Lr) and an auxiliary winding (Ls) and a permanent capacitor (Cr) and a start capacitor (Cs) which can be switched on only briefly during the start-up phase,
wherein:
- this motor has a first motor terminal (Cp1), a second motor terminal (Cp2) and a third motor terminal (Cp3);
- the main winding (Lr) is directly connectable via the third motor terminal (Cp3) to an AC power source (L) and is directly connectable via the second motor terminal (Cp2) to an AC zero conductor (N);
- the auxiliary winding (Ls) is directly connectable via the first motor terminal (Cp1) and the serially connected permanent capacitor (Cr) to the AC power source (L) and is directly connectable via the second motor terminal (Cp2) to the AC zero conductor (N); and
- the electronic starting circuit (Rs) has an electronic switch (A) which connects or separates the start capacitor (Cs) which is arranged parallel to the permanent capacitor (Cr);
**characterized in that**
an electronic starting circuit according to one of the preceding claims 1 to 10 together with the permanent capacitor (Cr) and / or with the start capacitor (Cs) forms an independently manageable product that is intended for attachment to or for installation in a single-phase induction motor.

12. The electronic starting circuit device according to claim 11,
**characterized in that**
the permanent capacitor (Cr) is a foil capacitor or a metal paper capacitor, each having self-healing properties and each having a capacitance in the range of about 1 µF to about 50 µF (microfarad).

13. The electronic starting circuit device according to claim 11 or 12,
**characterized in that**
the start capacitor (Cs) is a bipolar or non-polarized electrolytic capacitor having 10 times to 50 times the capacitance of the permanent capacitor (Cr).

14. A single-phase induction motor
comprising a stator having at least one main winding (Lr) and an auxiliary winding (Ls) and a permanent capacitor (Cr) and a start capacitor (Cs) which can be switched on only briefly during the start-up phase,
wherein:
- this motor has a first motor terminal (Cp1), a second motor terminal (Cp2) and a third motor terminal (Cp3);
the main winding (Lr) is directly connectable via the third motor terminal (Cp3) to an AC power source (L) and is directly connectable via the second motor terminal (Cp2) to an AC zero conductor (N);
- the auxiliary winding (Ls) is directly connectable via the first motor terminal (Cp1) and the serially connected permanent capacitor (Cr) to the AC power source (L) and is directly connectable via the second motor terminal (Cp2) to the AC zero conductor (N); and
- the electronic starting circuit (Rs) has an electronic switch (A) which connects or separates the start capacitor (Cs) which is arranged parallel to the permanent capacitor (Cr);
**characterized in that**
an electronic starting circuit (Rs) according to one of claims 1 to 10 is provided.

15. The single-phase induction motor according to claim 14,
**characterized in that**
said single-phase induction motor is designed for a power of about 100 Watts to about 2000 Watts.

## Revendications

1. Circuit électronique de démarrage
pour faire démarrer un moteur à induction monophasé,
qui a un stator, ayant au moins un enroulement (Lr) principal et un enroulement (Ls) auxiliaire, ainsi qu'un condensateur (Cr) permanent et un condensateur (Cs) de démarrage, pouvant être mis en circuit seulement brièvement pendant la phase de démarrage,
dans lequel :
- ce moteur a une première borne (Cp1), une deuxième borne (Cp2) et une troisième borne (Cp3);
- l'enroulement (Lr) principal peut être connecté, par l'intermédiaire de la troisième borne (Cp3) du moteur, directement à un conducteur (L) extérieur de la source de courant alternatif, ainsi que, par la deuxième borne (Cp2) du moteur, directement au conducteur (N) neutre de la source de courant alternatif;
- l'enroulement (Ls) auxiliaire peut être connecté, par l'intermédiaire de la première borne (Cp1) du moteur et du condensateur (Cr) permanent monté en série avec celui-ci, directement au conducteur (L) extérieur de la source de courant alternatif, ainsi que, par la deuxième borne (Cp2) du moteur, directement au conducteur (N) neutre de la source de courant alternatif et
- le circuit (Rs) électronique de démarrage a un interrupteur (A) électronique, qui met en circuit ou sépare le condensateur (Cs) de démarrage monté en parallèle avec le condensateur (Cr) permanent;
dans lequel :
- cet interrupteur (A) électronique a un transistor IGBT (T1) et un premier redresseur (Gr1) en pont, dont la borne positive est reliée au collecteur de l'IGBT, dont la borne négative est reliée à l'émetteur de l'IGBT et dont la première borne de courant alternatif est reliée, par l'intermédiaire d'une quatrième borne (AL110) de circuit de démarrage, au conducteur (L) extérieur de la source de courant alternatif et dont la deuxième borne de courant alternatif est reliée, par l'intermédiaire d'une troisième borne (ACs) de circuit de démarrage, au condensateur (Cs) de démarrage;
- il y a, en outre, un dispositif de commande, qui détecte, par une mesure de tension, qu'une vitesse de rotation de fonctionnement est atteinte et, en conséquence, envoie à la grille du transistor IGBT (T1) un signal de commande pour rendre passant et bloqué le transistor IGBT (T1), dans lequel, en effectuant l'opération d'interruption, à un intervalle de temps défini, pour le passage par zéro de la tension aux bornes du condensateur (Cr) permanent, on obtient une charge optimisée de l'interrupteur et
- il y a une alimentation (B) en tension basse, connectée à la source (L, N) de courant alternatif, des composants du circuit électronique de démarrage;
**caractérisé en ce que**
- l'interrupteur (A) électronique a un deuxième redresseur (Gr2) en pont, qui est constitué de la même façon que le premier redresseur (Gr1) en pont et qui est connecté au transistor IGBT (T1) et dont la première borne de courant alternatif est reliée à une cinquième borne (AL230) du circuit de démarrage, qui peut, en alternance avec la quatrième borne (AL110) du circuit de démarrage, être reliée au conducteur (L) extérieur de la source de courant alternatif, et dont la deuxième borne de courant alternatif est, par l'intermédiaire de la troisième borne (ACs) de circuit de démarrage, reliée au condensateur (Cs) de démarrage;
- dans le cas d'une première tension nominale, par exemple de 110 Volt, la source (L, N) de courant alternatif, la borne adaptée de l'enroulement de transformateur de l'alimentation (B) en tension basse, est, par l'intermédiaire de la quatrième borne (AL110) du circuit de démarrage, reliée au conducteur (L) extérieur de la source de courant alternatif, et dans le cas d'une deuxième tension nominale, par exemple de 230 Volt, la source (L, N) de courant alternatif de la borne appropriée de l'enroulement de transformateur de l'alimentation (B) en tension basse est, par l'intermédiaire de la cinquième borne (AL230) du circuit de démarrage, reliée au conducteur (L) extérieur de la source de courant alternatif;
- le dispositif de commande comprend une micro unité (H) de commande, qui détecte la tension en fonction de la vitesse de rotation du moteur sur l'un des enroulements (Ls ou Lr) du moteur et, lorsqu'une valeur de seuil donnée à l'avance est atteinte, met le transistor IGBT (T1) dans l'état bloqué, et qui apprend par laquelle des deux tensions nominales alternatives la source (L, H) de courant alternatif fonctionne et, suivant cela, choisit les amplitudes de tension données à l'avance d'une manière appropriée à cela et mémorisées, auxquelles il faut mettre l'interrupteur (A) électronique à l'état passant ou à l'état bloqué pour connecter le transistor (T1) IGBT et
- cette micro unité (H) de commande donne, à un instant donné à l'avance rapporté au passage par zéro, sur la base des passages par zéro détectés de la tension, les mises à l'état passant et à l'état bloqué du transistor IGBT (T1) et
- cette micro unité (H) de commande détermine les fréquences nominales différentes, par exemple de 50 ou 60 Hertz, de la source de courant alternatif, en mesurant le temps entre deux passages par zéro, notamment entre deux passages par zéro successifs et, suivant cela, choisit les temps d'attente adaptés à cela donnés à l'avance et mémorisés, qui dépendent de la fréquence et qui sont prévus entre les passages de tension mesurés et l'exécution de l'opération d'interruption pour la mise à l'état passant du transistor IGBT (T1).

2. Circuit électronique de démarrage suivant la revendication 1,
**caractérisé en ce que**
le moteur à induction monophasé peut fonctionner avec un courant alternatif d'une tension nominale de 110 Volt ou de 230 Volt, ainsi qu'avec une fréquence nominale de 50 Hertz ou 60 Hertz et la source (L, N) de courant alternatif procure un courant alternatif correspondant et
le circuit (Rs) électronique de démarrage a cinq bornes, à savoir :
- une première borne (AL) de circuit de démarrage, par laquelle un dispositif (E) de mesure de la tension du circuit (Rs) de démarrage est connecté au conducteur (L) extérieur de la source de courant alternatif à la première borne (Cp1) du moteur;
- une deuxième borne (AN) de circuit de démarrage, par laquelle le dispositif (E) de mesure de la tension du circuit (Rs) de démarrage est relié au conducteur (N) neutre de la source de courant alternatif;
- une troisième borne (ACs) de circuit de démarrage, par laquelle l'interrupteur (A) est connecté au condensateur (Cs) de démarrage, le transistor IGBT (T1) commutant cette borne (ACs) de circuit de démarrage, de manière à conduire le courant ou à ne pas conduire le courant;
- une quatrième borne (AL110) de circuit de démarrage, qui est reliée au conducteur (L) extérieur de la source de courant alternatif, dans la mesure où cette source de courant alternatif fournit une tension nominale de 110 Volt et
- une cinquième borne (AL230) de circuit de démarrage, qui est reliée, au lieu de la borne (AL110) de circuit de démarrage et en alternance avec celle-ci, au conducteur (L) extérieur de la source de courant alternatif, dans la mesure où cette source de courant alternatif fournit une tension nominale de 230 Volt.

3. Circuit électronique de démarrage suivant la revendication 2,
**caractérisé en ce que**
dans le dispositif (E) de mesure de tension du circuit (Rs) de démarrage, l'amplitude de la tension nominale de la source (L, N) de courant alternatif est déterminée, à cet effet
- le potentiel s'appliquant à la première borne (AL) du circuit de démarrage est appliqué à un premier condensateur (Cl);
- le potentiel s'appliquant à la deuxième borne (AN) du circuit de démarrage est appliqué à un deuxième condensateur (C2);
- les tensions chutant aux sorties de ces deux condensateurs (C1 et C2) sont appliquées aux entrées de courant alternatif d'un cinquième redresseur (Gr5) en pont et
- leurs signaux de sortie en courant continu sont appliqués, par l'intermédiaire d'un diviseur de tension et d'un limiteur (R3, R4, R2 et D1) de tension, à une entrée de transducteur analogique vers numérique de la micro unité (H) de commande.

4. Circuit électronique de démarrage suivant la revendication 3,
**caractérisé en ce que**
la tension s'appliquant entre la première borne (AL) de circuit de démarrage et la quatrième borne (AL110) de circuit de démarrage ou la cinquième borne (AL230) de circuit de démarrage est appliquée par l'intermédiaire de résistance série à la diode électroluminescente d'un premier optocoupleur (Op1), qui fournit un signal de sortie rectangulaire, dont le signe correspond au signe de la courbe de tension sur le condensateur (Cr) permanent et dont les fronts sont à peu près en synchronisme avec les passages par zéro de cette courbe de tension alternative sur le condensateur permanent et
ce signal rectangulaire est envoyé à une entrée numérique de la micro unité (H) de commande.

5. Circuit électronique de démarrage suivant l'une des revendications 1 à 4,
**caractérisé en ce que**
- l'alimentation (B) en tension basse est montée en transformateur et a un enroulement primaire à deux tensions, qui, au choix, peut être relié à la borne (AL110 ou AL230) du circuit de démarrage, qui correspond à la tension nominale mise à disposition par la source (L, N) de courant alternatif;
- cet enroulement primaire à deux tensions est couplé à un premier enroulement secondaire, qui met à disposition la tension basse alternative pour l'alimentation de la micro unité (H) de commande;
- cette tension basse alternative est redressée dans un quatrième redresseur (Gr4) en pont, en un signal de tension continue d'environ 20 Volt, qui, stabilisé par un élément (Sta1) de stabilisation à 5 Volt, est envoyé à la micro unité (H) de commande et
ce signal de tension continue est prélevé encore avant l'élément (Sta1) de stabilisation et est envoyé à une détection (F) de passage par zéro de la tension, qui envoie le signal de mesure résultant à une entrée de la micro unité (H) de commande, afin que celle-ci, s'il se produit éventuellement une défaillance de l'alimentation en tension, mette le transistor IGBT (Tr1) d'une manière sûre dans l'état bloqué.

6. Circuit électronique de démarrage suivant la revendication 5, **caractérisé en ce que** l'enroulement primaire à deux tensions de l'alimentation (B) à tension basse est couplé à un deuxième enroulement secondaire, qui met à disposition la tension basse alternative pour l'alimentation du transistor IGBT (Tr1);
cette tension basse alternative est redressée dans un troisième redresseur (Gr3) en pont, en un signal de courant continu d'environ 20 Volt, qui est envoyé à un deuxième optocoupleur (Op2), à la diode électroluminescente duquel est envoyé un signal d'interruption, qui est donné par la micro unité (H) de commande et qui, séparé finalement galvaniquement, est envoyé à la grille du transistor IGBT (Tr1).

7. Circuit électronique de démarrage suivant l'une des revendications 1 à 6,
**caractérisé en ce que**
le circuit (Rs) électronique de démarrage a une micro unité (H) de commande,
- qui détecte la tension en fonction de la vitesse de rotation du moteur sur l'un des enroulements (Ls, Lr) du moteur et, lorsqu'une valeur de seuil donnée à l'avance est atteinte, met le transistor IGBT (T1) à l'état bloqué et
- qui apprend avec laquelle des deux tensions nominales alternatives la source (L, N) de courant alternatif fonctionne et qui, suivant cela, choisit pour mettre le transistor IGBT (T1) à l'état passant les amplitudes de tension appropriées données à l'avance et mémorisées pour lesquelles l'interrupteur (A) électronique doit être mis à l'état passant ou à l'état bloqué et
- qui, sur la base du passage par zéro détecté de la tension, donne les mises à l'état passant ou à l'état bloqué du transistor IGBT (T1) à un instant donné à l'avance, rapporté au passage par zéro et
- qui détermine les fréquences nominales différentes, par exemple de 50 ou 60 Hertz de la source (L, N) de courant alternatif par mesure du temps entre deux passages par zéro successifs et, suivant cela, choisit et donne, pour les temps d'attente donnés à l'avance de manière appropriée et mémorisée en fonction de la fréquence, qui sont prévus entre les passages mesurés de la tension et la réalisation de l'opération de mise à l'état passant et à l'état bloqué.

8. Circuit électronique de démarrage suivant la revendication 7,
**caractérisé en ce que**,
dans la micro unité (H) de commande, sont mémorisés plusieurs jeux de données, qui contiennent des valeurs déterminées à l'avance, données à l'avance et mémorisées de manière fixe,
a) des amplitudes de tension pour lesquelles l'interrupteur (A) électronique doit être mis dans l'état passant ou dans l'état bloqué et
b) pour des temps d'attente, qui sont prévus entre les passages par zéro mesurés de la tension et l'exécution de l'opération d'interruption et pour les tensions nominales différentes et les fréquences différentes de la source (L, N) de courant alternatif, des jeux de données correspondants sont formés et sont mémorisés dans la micro unité (H) de commande et on passe entre ces jeux de données suivant les valeurs de mesure obtenues dans le dispositif (E) de mesure de la tension.

9. Circuit électronique de démarrage suivant la revendication 8,
**caractérisé en ce que**
le passage entre les jeux de données, pour des tensions nominales différentes, s'effectue automatiquement en fonction de la courbe de tension mesurée à l'accélération de la vitesse de rotation du moteur et
le passage entre les jeux de données, pour des fréquences nominales différentes, s'effectue automatiquement après mesure des intervalles de temps entre deux passages par zéro de la courbe de tension, notamment entre deux passages par zéro successifs de la courbe de tension.

10. Circuit électronique de démarrage suivant l'une des revendications 7 à 9,
**caractérisé en ce que** la micro unité (H) de commande, pour détecter l'état d'accélération de la vitesse de rotation du moteur, contrôle l'amplitude de la tension alternative s'appliquant entre la première borne (AL) de circuit de démarrage et la deuxième borne (AN) de circuit de démarrage et
met l'interrupteur (A) électronique dans un état passant, tant qu'une valeur de seuil fixée à l'avance, donnée à l'avance et mémorisée de cette amplitude de tension n'est pas dépassée et met l'interrupteur électronique dans l'état bloqué après dépassement de cette valeur de seuil.

11. Dispositif électronique de circuit de démarrage
pour faire démarrer un moteur à induction monophasé,
qui a un stator, ayant au moins un enroulement (Lr) principal et un enroulement (Ls) auxiliaire, ainsi qu'un condensateur (Cr) permanent et un condensateur (Cs) de démarrage, pouvant être mis en circuit seulement brièvement pendant la phase de démarrage,
dans lequel :
- ce moteur a une première borne (Cp1), une deuxième borne (Cp2) et une troisième borne (Cp3);
- l'enroulement (Lr) principal peut être connecté par l'intermédiaire de la troisième borne (Cp3) du moteur, directement à un conducteur (L) extérieur de la source de courant alternatif, ainsi que, par la deuxième borne (Cp2) du moteur, directement au conducteur (N) neutre de la source de courant alternatif;
- l'enroulement (Ls) auxiliaire peut être connecté par l'intermédiaire de la première borne (Cp1) du moteur et du condensateur (Cr) permanent monté en série avec celui-ci, directement au conducteur (L) extérieur de la source de courant alternatif, ainsi que par la deuxième borne (Cp2) du moteur, directement au conducteur (N) neutre de la source de courant alternatif et
- le circuit (Rs) électronique de démarrage a un interrupteur (A) électronique, qui met en circuit ou sépare le condensateur (Cs) de démarrage monté en parallèle avec le condensateur (Cr) permanent;
**caractérisé en ce que**
un circuit (Rs) électronique de démarrage suivant l'une des revendications précédentes 1 à 10, forme, ensemble avec le condensateur (Cr) permanent et/ou le condensateur (Cs) de démarrage, un produit manipulable indépendamment, qui est destiné à être monté ou à être incorporé dans un moteur à induction monophasé de ce genre.

12. Dispositif électronique de commande de démarrage suivant la revendication 11,
**caractérisé en ce que**
le condensateur (Cr) permanent est un condensateur à feuille ou un condensateur métal papier qui a des propriétés autorégénératrices et qui a une capacité dans la plage d'environ 1 µF à environ 50 µF (microfarad).

13. Dispositif électronique de commande de démarrage suivant la revendication 11 ou 12,
**caractérisé en ce que**
le condensateur (Cs) de démarrage et un condensateur électrolytique bipolarisé ou non polarisé, qui a de 10 fois à 50 fois la capacité du condensateur (Cr) permanent.

14. Moteur à induction monophasé
qui a un stator, ayant au moins un enroulement (Lr) principal et un enroulement (Ls) auxiliaire, ainsi qu'un condensateur (Cr) permanent et un condensateur (Cs) de démarrage pouvant être mis en circuit brièvement par la phase de démarrage,
dans lequel :
- ce moteur a une première borne (Cp1), une deuxième borne (Cp2) et une troisième borne (Cp3);
- l'enroulement (Lr) principal peut être connecté, par l'intermédiaire de la troisième borne (Cp3) du moteur, directement à un conducteur (L) extérieur de la source de courant alternatif, ainsi que, par la deuxième borne (Cp2) du moteur, directement au conducteur (N) neutre de la source de courant alternatif;
- l'enroulement (Ls) auxiliaire peut être connecté, par l'intermédiaire de la première borne (Cp1) du moteur et du condensateur (Cr) permanent monté en série avec celui-ci, directement au conducteur (L) extérieur de la source de courant alternatif, ainsi que, par la deuxième borne (Cp2) du moteur, directement au conducteur (N) neutre de la source de courant alternatif et
- le circuit (Rs) électronique de démarrage a un interrupteur (A) électronique, qui met en circuit ou sépare le condensateur (Cs) de démarrage monté en parallèle avec le condensateur (Cr) permanent;
**caractérisé en ce qu'**
il est prévu une commande (Rs) électronique de démarrage suivant l'une des revendications 1 à 10.

15. Moteur à induction monophasé suivant la revendication 14,
**caractérisé en ce que**
ce moteur à induction monophasé est conçu pour une puissance d'environ 100 Watt à environ 2000 Watt.
